# EUROPÄISCHE PATENTSCHRIFT

(11) **EP 2 873 950 B1**
(45) Veröffentlichungstag und Bekanntmachung des Hinweises auf die Patenterteilung: **15.11.2017**
(21) Anmeldenummer: 14184575.0
(22) Anmeldetag: 12.09.2014
(51) Int. Cl.: G01C 21/36, G09B 29/10

(54) **Ansteuereinrichtung und Verfahren zum Markieren einer Mehrzahl möglicher Ziele**
Control device and a method for marking a plurality of possible destinations
Dispositif de commande et procédé de marquage d'une multitude de destinations possibles

(30) Priorität: 24.10.2013 DE 102013221630
(43) Veröffentlichungstag der Anmeldung: 20.05.2015
(60) Teilanmeldung: 16153046.4
(73) Patentinhaber: Volkswagen Aktiengesellschaft, 38440 Wolfsburg (DE)
(72) Erfinder: Chudzinski, Filip Piotr, 10557 Berlin (DE)

(56) Entgegenhaltungen:
- US-A- 6 064 941
- US-A1- 2005 051 623
- US-A1- 2008 040 684

## Beschreibung

Ausführungsbeispiele beziehen sich auf eine Ansteuereinrichtung zum Markieren einer Mehrzahl möglicher Ziele, auf eine Vorrichtung mit der Ansteuereinrichtung, auf ein Verfahren zum Markieren einer Mehrzahl möglicher Ziele, sowie auf ein Computerprogramm zur Durchführung des Verfahrens.

Bei vielen konventionellen Navigationsgeräten, Routenplanern oder dergleichen werden einem Nutzer sogenannte Points of Interest (von Englisch: "interessantes Ziel") vorgeschlagen. Oft können diese Ziele von anderen Benutzern vorgeschlagen oder kommentiert werden. Points of Interest, also mögliche Ziele, werden einem Benutzer meist mit einem Bezug zu einem Standpunkt des Benutzers vorgeschlagen. Viele der konventionellen Navigationssysteme oder Routenplaner können eine Route zu einem Point of Interest von dem Standpunkt aus vorschlagen. Beispielsweise betrifft die US 2008/040684 A1 ein Navigationssystem bei dem unterschiedliche Ziele dargestellt werden. Allerdings kann es vorkommen, dass ein Anzeigebereich, der eine Information über ein Ziel umfasst, andere relevante Ziele überdeckt. Dies ist unerwünscht. Die US 6 064 941 A und die US 2005/051623 A1 betreffen ähnliche Navigationssysteme.

In vielen Fällen kann es einem Benutzer schwer fallen, sich für eines der vorgeschlagenen möglichen Ziele zu entscheiden. Dies kann unterschiedliche Gründe haben. Beispielsweise kann es für den Benutzer schwierig sein, sich aufgrund der vielen vorgeschlagenen Ziele einen Überblick über die vorgeschlagenen Ziele zu verschaffen. Ferner kann es für einen Benutzer auch schwierig sein, abzuschätzen, wie weit die Ziele von seinem aktuellen Standpunkt entfernt sind bzw. wie lange er braucht, um das Ziel zu erreichen. Des Weiteren kann ein Zusammenhang fehlen, wo ein vorgeschlagenes Ziel, im Vergleich zu weiteren anderen möglichen vorgeschlagenen Zielen, in einer Umgebung liegt. Dies kann beispielsweise dazu führen, dass sich ein Benutzer für jedes mögliche Ziel einen Routenvorschlag unterbreiten lassen muss. Dies könnte insbesondere dann aufwändig sein, wenn sich der Benutzer in einem Fahrzeug befindet und sich eigentlich auf den Verkehr und die Fahrsituation konzentrieren soll.

Es besteht daher ein Bedarf daran, eine Auswahl eines möglichen Ziels für einen Benutzer zu vereinfachen.

Diesem Bedarf tragen eine Ansteuereinrichtung, die Vorrichtung, das Verfahren und das Computerprogramm gemäß den unabhängigen Ansprüchen Rechnung.

Ausführungsbeispiele betreffen eine Ansteuereinrichtung zum Markieren einer Mehrzahl möglicher Ziele in einem Kartenausschnitt, der auf einer Anzeigefläche angezeigt wird, gemäß Anspruch 1. Die Ansteuereinrichtung besitzt eine Eingangseinrichtung. Die Eingangseinrichtung ist ausgebildet, um ein Kategorieauswahlsignal zu empfangen. Das Kategorieauswahlsignal korrespondiert zu einer Auswahl eines Benutzers. Das Kategorieauswahlsignal umfasst eine Information über eine gewählte Kategorie möglicher Primärziele. Ferner weist die Ansteuereinrichtung einen Controller auf. Der Controller ist ausgebildet, um ansprechend auf das Kategorieauswahlsignal ein Anzeigesignal zu erzeugen. Das Anzeigesignal bewirkt eine Wiedergabe möglicher Primärziele korrespondierend zu der Information der gewählten Kategorie. Ferner bewirkt das Anzeigesignal auch eine Wiedergabe von Sekundärzielen zumindest einer anderen Kategorie als der gewählten Kategorie. Die Wiedergabe wird in dem Kartenausschnitt bewirkt. Die Darstellung der Primärziele der gewählten Kategorie unterscheidet sich von der Darstellung der Sekundärziele der anderen Kategorie. Ferner ist der Controller ausgebildet, um das Anzeigesignal so zu erzeugen, dass auch eine Wiedergabe eines Anzeigebereichs mit Information zu dem Ziel bewirkt wird. Dem Anzeigebereich ist eine Information zu einem der Primärziele zugeordnet. Der Controller ist auch ausgebildet, um das Anzeigesignal so zu erzeugen, dass der Anzeigebereich die Primärziele nicht überlappt und Sekundärziele überlappt.

Dadurch, dass sowohl Primärziele wie auch Sekundärziele der nicht gewählten Kategorie dargestellt werden und sich die Darstellung von Primärzielen und Sekundärzielen unterscheidet, kann der Nutzer einen guten Überblick über viele für einen Benutzer interessante Ziel erhalten. Beispielsweise könnte der Nutzer so eine Information über möglicherweise besser erreichbare Sekundärziele erhalten. Diese Sekundärziele können bei manchen Ausführungsbeispielen beispielsweise eine gute Alternative zu Primärzielen darstellen, die der gewählten Kategorie zugeordnet sind. Beispielsweise kann in dem Anzeigebereich eine Information oder eine Detailinformation zu dem Ziel angezeigt sein. So kann bei manchen Ausführungsbeispielen ermöglicht werden, dass der Benutzer gleichzeitig eine Information zu einem gewählten Primärziel erhält und einen Überblick darüber, wo sich Primärziele der gleichen Kategorie befinden. Ferner könnte dem Benutzer so auch mitgeteilt werden, wo sich noch Sekunderziele einer anderer Kategorien befinden. Diese könnten ebenfalls interessant sein. So kann der Benutzer ggf. Besuche von Zielen unterschiedlicher Kategorie verbinden oder durch Ziele anderer Kategorie ersetzen. Dadurch, dass der Anzeigebereich vor dem Hintergrund des Kartenausschnitts, in dem die Mehrzahl möglicher Ziele markiert ist, dargestellt wird, kann ein Bezug zwischen der Information zu dem Ziel und der Lage des Ziels hergestellt werden. So kann eine Priorisierung für den Benutzer ermöglicht werden. Primärziele der gewählten Kategorie, die der Benutzer ja sehen wollte, sind sichtbar. Sekundärziele sind eingeblendet, können aber zufälligerweise durch den Anzeigebereich, der eine Information zu einem Primärziel enthält, überdeckt sein. Der Benutzer kann also die gewünschten Informationen priorisiert und soweit möglich weitere zusätzliche Informationen erhalten. Die beschriebene Wiedergabe erfolgt ansprechend auf ein Kartenanzeigesignal. Eine Auswahl eines Benutzers kann dabei auf jedwede Art und Weise getroffen werden. Beispielsweise kann die Auswahl des Benutzers aus einer Mehrzahl von Kategorien erfolgen. Beispielsweise kann die Auswahl über einen Filter, eine Eingabemaske, mittels einer Spracheingabe oder dgl. getroffen werden. Beispielsweise kann die Auswahl getroffen werden, bevor der Benutzer mit der Suche nach einem Ziel bzw. einem Auswahlverfahren beginnt. Alternativ kann die Auswahl für die Ansteuereinrichtung voreingestellt sein.

Eine Kategorie kann dabei beispielsweise jedwede Kategorie sein, die eine Mehrzahl möglicher Ziele umfasst. Beispielsweise können Ziele mit unterschiedlichen Funktionen oder unterschiedlicher Art unterschiedlichen Kategorien zugeordnet sein. Beispielsweise können alle Restaurants einer Kategorie zugeordnet sein. Beispielsweise können alle Ziele, die Sport betreffen einer anderen Kategorie zugeordnet sein. Beispielsweise können Ziele, die Geschäfte sind, in einer Kategorie zusammengefasst sein.

Eine Darstellung der Primärziele kann sich von der Darstellung der Sekundärziele auf jedwede Art und Weise unterscheiden. Beispielsweise kann sich die Darstellung in der Farbe, einer Form, einem Symbol, einer Schraffierung, einer Intensität, einer Transparenz, einem Kontrast und/oder weiteren Merkmalen unterscheiden. Beispielsweise kann ein Kartenausschnitt auf jedwede Art und Weise wiedergegeben werden. Beispielsweise kann der Kartenausschnitt als Landkarte, Satellitendarstellung, 3D-Darstellung wiedergegeben Als Anzeigefläche kann jedwede Art von Anzeigefläche verwendet werden. Beispielsweise kann die Anzeigefläche ein Touchscreen, ein Display oder etc. sein. Signale können dabei beispielsweise einen binären, analogen, digitalen oder elektrischen Wert repräsentieren oder eine Information, die durch einen Wert repräsentiert ist. Eine Eingangseinrichtung kann jedwede Einrichtung sein, die ausgebildet ist, um zumindest eines der genannten Signale zu empfangen. Beispielsweise kann die Eingangseinrichtung eine Schnittstelle, ein Kontakt, ein Register oder ähnliches sein. Ein Controller kann jedwede Einrichtung sein, die ausgebildet ist, um zumindest eines der genannten Signale zu verarbeiten. Beispielsweise kann der Controller ein Prozessor, ein digitaler Signalprozessor, ein Hauptprozessor (CPU vom englischen: Central Processing Unit), ein Multizweckprozessor (MPP von englisch Multi Purpose Prozessor) etc. sein. Gemäß der Erfindung ist der Controller ausgebildet, um das Anzeigesignal so zu erzeugen, dass sich eine Darstellung des Primärziels, dessen Information dem wiedergegebenen Anzeigebereich zugeordnet ist, von der Darstellung der anderen Primärziele und der Darstellung der Sekundärziele unterscheidet. So kann ermöglicht werden, dass der Benutzer auf einen Blick erkennt, wo sich das von ihm gewählte Primärziel, das dem angezeigten Anzeigebereich zugeordnet ist, befindet.

Bei einigen weiteren Ausführungsbeispielen ist der Controller ergänzend ausgebildet, um das Anzeigesignal so zu verändern, dass eine verkleinerte Wiedergabe des Anzeigebereichs bewirkt wird. Dies erfolgt ansprechend auf ein von der Eingangseinrichtung empfangenes Kartenanzeigesignal, das zu einer Bedienbewegung eines Benutzers korrespondiert. Dadurch kann bei manchen Ausführungsbeispielen ermöglicht werden, dass der Benutzer größere Teile des Kartenausschnitts, auf dem die Primärziele, das gewählte Ziel und die Sekundärziele angezeigt werden, sehen kann. Eine Bedienbewegung oder eine vorbestimmte Auswahlgeste eines Benutzers kann beispielsweise eine Bedienbewegung eines Benutzers sein, die innerhalb eines vorbestimmten Bereichs auf oder über der Anzeigefläche erfolgen kann. Beispielsweise kann die Auswahlgeste von der Anzeigefläche beabstandet sein oder mit einem Kontakt zu der Anzeigefläche erfolgen. Die Auswahlgeste des Benutzers kann ggf. auf jedwede Art und Weise erfasst werden. Es kann beispielsweise ein kapazitiver, resistiver oder kamerabasierter Sensor eingesetzt werden.

Ergänzend ist der Controller bei einigen weiteren Ausführungsbeispielen ausgebildet, um das Anzeigesignal so zu verändern, dass die Wiedergabe des Anzeigebereichs in einem Randbereich der Anzeigefläche bewirkt wird. Dies erfolgt ansprechend auf ein von der Eingangseinrichtung erfasstes Kartenanzeigesignal. Das Kartenanzeigesignal korrespondiert zu der Bedienbewegung eines Benutzers. So kann ermöglicht werden, dass der Benutzer Bereiche des Kartenausschnitts, in dem sich Sekundärziele befinden, sehen kann. Beispielsweise könnte der Effekt dadurch verstärkt werden, dass der Anzeigebereich verkleinert und in einem Randbereich der Anzeigefläche wiedergegeben wird.

Bei einigen weiteren Ausführungsbeispielen ist der Controller ausgebildet, um ansprechend auf ein Menüauswahlsignal ein Kategorieauswahlanzeigesignal zu erzeugen. Das Menüauswahlsignal wird von der Eingangseinrichtung empfangen. Das Menüauswahlsignal korrespondiert ferner zu einer Auswahl eines Benutzers. Das Kategorieauswahlanzeigesignal bewirkt die Wiedergabe einer Mehrzahl von Kategorieauswahlbereichen. So kann bei manchen Ausführungsbeispiefen eine Maske zum Auswählen einer Kategorie für einen Benutzer erzeugt werden. Jedem der Kategorieauswahlbereiche kann jeweils eine Information zu einer unterschiedlichen Kategorie zugeordnet sein. So kann jedem der Kategorieauswahlbereiche zumindest ein Ziel oder eine Information zu einem Ziel zugeordnet sein. So kann bei manchen Ausführungsbeispielen auf einfache Art und Weise ermöglicht werden, dass der Benutzer eine Übersicht über auszuwählende mögliche Kategorien erhält.

Bei einigen weiteren Ausführungsbeispielen ist die Eingangseinrichtung ausgebildet, um das Kategorieauswahlsignal zu empfangen, wenn eine Auswahlgeste des Benutzers an einem Kategorieauswahibereich beginnt. So kann bei manchen Ausführungsbeispielen auf einfache Art und Weise ermöglicht werden, dass der Benutzer eine Kategorie auswählen kann. Mit anderen Worten ausgedrückt kann der Benutzer beispielsweise auf bzw. an den Kategorieauswahlbereich zeigen, ziehen oder drücken.

Bei einigen weiteren Ausführungsbeispielen ist der Controller ausgebildet, um ansprechend auf das Kategorieauswahlsignal das Anzeigesignal so zu verändern, dass die Wiedergabe einer Mehrzahl von Subkategorieauswahlbereichen bewirkt wird. Dies kann erfolgen, wenn dem Kategorieauswahlbereich eine Information zu einer Mehrzahl von Subkategorien zugeordnet ist. Dabei kann beispielsweise jedem der Subkategoriebereiche eine Information zu einer Subkategorie bzw. Zielen der Subkategorie zugeordnet sein. So kann bei manchen Ausführungsbeispielen ermöglicht werden, dass der Benutzer mögliche Ziele genauer eingrenzen kann. Beispielsweise kann eine Subkategorie jedwede Kategorie sein. Beispielsweise kann, wenn die Kategorie "Essen" oder "Restaurants" ist eine Subkategorie "Bayrisch", "Gut Bürgerlich", "Italienisch", "Chinesisch", "Fast Food", "Takeaway" und/oder etc. sein.

Bei einigen weiteren Ausführungsbeispielen ist die Eingangseinrichtung ausgebildet, um das Kategorieauswahlsignal zu empfangen, wenn eine Auswahlgeste eines Benutzers an einem Subkategoriebereich beginnt. So kann bei manchen Ausführungsbeispielen ermöglicht werden, dass Primärziele einer Subkategorie und Sekundärziele anderer Subkategorien aber der gleichen Kategorie bzw. Hauptkategorie angezeigt werden können.

Bei einigen weiteren Ausführungsbeispielen ist der Controller ausgebildet, um das Kategorieauswahlanzeigesignal so zu erzeugen, dass eine Wiedergabe eines Anzeigebereichs bewirkt wird. Diesem Anzeigebereich ist eine Information eines bereits oder zuletzt besuchten Ziels zugeordnet. So kann bei manchen Ausführungsbeispielen eine Auswahl für den Benutzer vereinfacht werden. Beispielsweise kann in dem Auswahlbereich eine Information, die zu dem zuletzt besuchten Ziel korrespondiert, angezeigt werden.

Einige Ausführungsbeispiele betreffen eine Vorrichtung mit der Ansteuereinrichtung nach zumindest einem der vorhergehenden Ausführungsbeispiele und einer Anzeigeeinrichtung. Die Anzeigeeinrichtung zeigt eine Anzeige gemäß dem Anzeigesignal an. Beispielsweise kann die Vorrichtung ein Smartphone, ein Laptop, ein Tablet-PC, eine Anzeigevorrichtung, die fest in einem Fahrzeug installiert ist, oder dergleichen sein. So kann beispielsweise ermöglicht werden, dass ein Benutzer, der sich auf der Vorrichtung mögliche Ziele in seiner Umgebung anzeigen lassen möchte, diese auswählen, vorsortieren und/oder zwischenspeichern kann.

Bei einigen weiteren Ausführungsbeispielen gibt die Ansteuereinrichtung bei Herstellung einer Verbindung zwischen der Vorrichtung und einem fahrzeuginternen Navigationsgerät ein Navigationssignal aus. Das Navigationssignal bewirkt eine Ausgabe einer Navigation mittels des fahrzeuginternen Navigationsgeräts zu dem ausgewählten Primärziel. So kann bei manchen Ausführungsbeispielen ermöglicht werden, dass ein Benutzer, getrennt von dem Fahrzeug, beispielsweise Zuhause, mit der Vorrichtung ein Ziel sucht und auswählt. Dann kann er die Vorrichtung in einem Fahrzeug anschließen und sich von dem Navigationssystem des Fahrzeugs zu dem Ziel navigieren lassen. Mit anderen Worten ausgedrückt kann die Vorrichtung bei manchen Ausführungsbeispielen als ein mobiles Gerät an ein fahrzeugeigenes Navigationsgerät andockbar sein. Das Navigationsgerät kann dann beispielsweise automatisch eine Route zu dem auf dem mobilen Gerät ausgewählten Ziel generieren.

Einige Ausführungsbeispiele betreffen ein Verfahren zum Markieren einer Mehrzahl möglicher Ziele in einem Kartenausschnitt auf einer Anzeigefläche gemäß Anspruch 11. Bei dem Verfahren wird ein Kategorieauswahlsignal empfangen. Das Kategorieauswahlsignal korrespondiert zu einer Auswahl eines Benutzers. Das Kategorieauswahlsignal umfasst eine Information über eine gewählte Kategorie möglicher Primärziele. Ferner wird ein Anzeigesignal erzeugt. Dies erfolgt ansprechend auf das Kategorieauswahlsignal. Das Anzeigesignal bewirkt eine Wiedergabe möglicher Primärziele korrespondierend zu der Information der gewählten Kategorie und eine Wiedergabe von Sekundärzielen zumindest eine andere Kategorie in dem Kartenausschnitt. Die Darstellung der Primärziele der gewählten Kategorie unterscheidet sich von der Darstellung der Sekundärziele der anderen Kategorie. Das Anzeigesignal wird so erzeugt, dass eine Wiedergabe eines Anzeigebereichs bewirkt wird, wobei dem Anzeigebereich eine Information zu einem ausgewählten Primärziel zugeordnet ist. Das Anzeigesignal wird so erzeugt, dass der Anzeigebereich die Primärziele nicht überlappt und Sekundärziele überlappt.

Einige Ausführungsbeispiele betreffen ein Computerprogramm gemäß Anspruch 12 zur Durchführung des Verfahrens nach Anspruch 11, wenn das Computerprogramm auf einer programmierbaren Hardwarekomponente abläuft.

Ausführungsbeispiele der vorliegenden Erfindung werden nachfolgend bezugnehmend auf die beiliegenden Figuren näher erläutert. Es zeigen:
- Fig. 1: zeigt eine schematische Darstellung einer Ansteuereinrichtung zum Markieren einer Mehrzahl möglicher Ziele in einem Kartenausschnitt auf einer Anzeigefläche gemäß einem Ausführungsbeispiel;
- Fig. 2: zeigt eine schematische Darstellung eines Verfahrens zum Markieren einer Mehrzahl möglicher Ziele in einem Kartenausschnitt auf einer Anzeigefläche gemäß einem Ausführungsbeispiel;
- Fig.3: zeigt eine schematische Darstellung einer Wiedergabe auf einer Anzeigefläche gemäß einem Ausführungsbeispiel;
- Fig.4: zeigt eine schematische Darstellung einer Wiedergabe auf einer Anzeigefläche gemäß einem weiteren Ausführungsbeispiel;
- Fig.5: zeigt eine schematische Darstellung einer Wiedergabe auf einer Anzeigefläche gemäß einem weiteren Ausführungsbeispiel;
- Fig. 6: zeigt eine schematische Darstellung einer Wiedergabe auf einer Anzeigefläche gemäß einem weiteren Ausführungsbeispiel; und
- Fig.7: zeigt eine schematische Darstellung einer Wiedergabe auf einer Anzeigefläche gemäß einem weiteren Ausführungsbeispiel.

Verschiedene Ausführungsbeispiele werden nun ausführlicher unter Bezugnahme auf die beiliegenden Zeichnungen beschrieben, in denen einige Ausführungsbeispiele dargestellt sind.

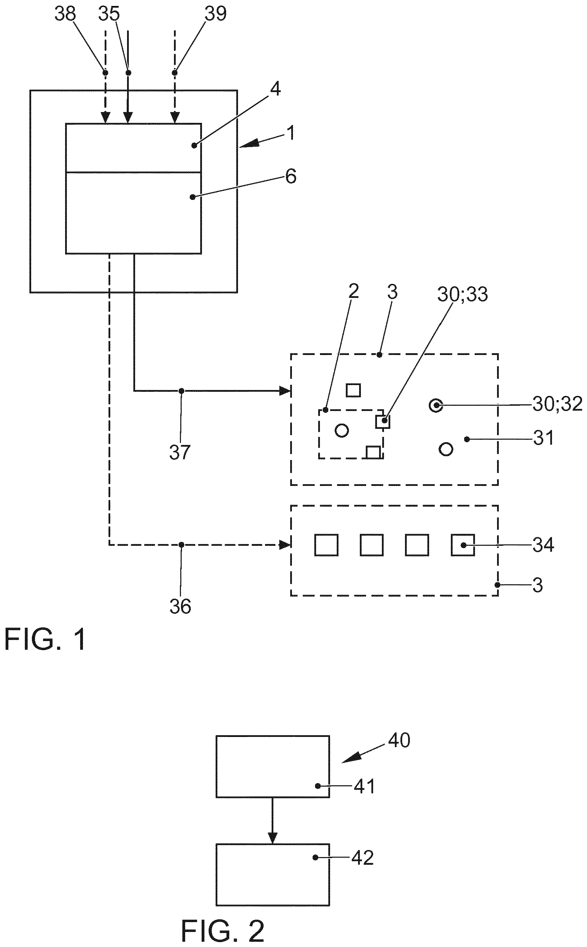

Fig. 1 zeigt eine schematische Darstellung einer Ansteuereinrichtung zum Markieren einer Mehrzahl möglicher Ziele in einem Kartenausschnitt auf einer Anzeigefläche gemäß einem Ausführungsbeispiel.

Fig. 1 zeigt eine Ansteuereinrichtung 1 zum Markieren einer Mehrzahl möglicher Ziele 30 in einem Kartenausschnitt 31 auf einer Anzeigefläche 3. Die Ansteuereinrichtung 1 umfasst eine Eingangseinrichtung 4. Die Eingangseinrichtung 4 ist ausgebildet, um ein Kategorieauswahlsignal 35 zu empfangen. Das Kategorieauswahlsignal 35 korrespondiert zu einer Auswahl eines Benutzers. Das Kategorieauswahlsignal 35 umfasst eine Information über eine gewählte Kategorie möglicher Primärziele 32. Ferner umfasst die Ansteuereinrichtung 1 einen Controller 6. Der Controller 6 ist ausgebildet, um ansprechend auf das Kategorieauswahlsignal 35 ein Anzeigesignal 37 zu erzeugen. Das Anzeigesignal 37 bewirkt eine Wiedergabe möglicher Primärziele 32, korrespondierend zu der Information der gewählten Kategorie. Ferner bewirkt das Anzeigesignal 37 auch eine Wiedergabe von Sekundärzielen 33 der Ziele 30 zumindest einer anderen Kategorie in dem Kartenausschnitt 31. Eine Darstellung der Primärziele 32 der gewählten Kategorie unterscheidet sich dabei von einer Darstellung der Sekundärziele 33 der anderen Kategorie. Die Ziele 30 werden also als Primärziele 32 oder Sekundärziele 33, je nach gewählter Kategorie, dargestellt.

Bei dem Ausführungsbeispiel der Fig. 1 kann die Eingangseinrichtung 4 optional auch ausgebildet sein, um ein Kartenanzeigesignal 38 zu empfangen. Das Kartenanzeigesignal 38 korrespondiert zu einer Bedienbewegung des Benutzers. Beispielsweise kann der Controller 6 ausgebildet sein, um das Anzeigesignal 37 so zu erzeugen, dass die Wiedergabe eines Anzeigebereichs 2 bewirkt wird. Dabei ist dem Anzeigebereich 2 eine Information zu einem der Primärziele 32 zugeordnet. Der Controller 6 kann auch ausgebildet sein, um ansprechend auf das Kartenanzeigesignal 38 das Anzeigesignal 37 so zu verändern, dass eine verkleinerte Wiedergabe eines Anzeigebereichs bewirkt wird. Ferner kann die Eingangseinrichtung 4 ausgebildet sein, um ein Menüauswahlsignal 39 zu empfangen. Das Menüauswahlsignal 39 korrespondiert zu einer Auswahlgeste eines Benutzers. Der Controller 6 kann ausgebildet sein, um in Reaktion auf das Menüauswahlsignal 39 ein Kategorieauswahlanzeigesignal 36 so zu erzeugen, dass die Wiedergabe einer Mehrzahl von Kategorieauswahlbereichen 34 auf der Anzeigefläche 3 bewirkt wird.

Die Eingangseinrichtung 4 kann mit dem Controller 6 verbunden bzw. verkoppelt sein. Ggf. kann die Eingangseinrichtung 4 eine Eingangsschnittstelle des Controllers 6 sein. Alternativ kann die Eingangseinrichtung 4 mit dem Controller 6 über einen Leiter verbunden sein. Beispielsweise können die Eingangseinrichtung 4 und der Controller 6 auf einer gemeinsamen Leiterplatte, einem Chip oder einer Platine angeordnet sein.

Fig. 2 zeigt eine schematische Darstellung eines Verfahrens zum Markieren einer Mehrzahl möglicher Ziele in einem Kartenausschnitt auf einer Anzeigefläche gemäß einem Ausführungsbeispiel.

Wie in Fig. 2 dargestellt, wird bei einem Verfahren 40 zum Markieren einer Mehrzahl möglicher Ziele 30 in einem Kartenausschnitt 31 auf einer Anzeigefläche 3 ein Kategorieauswahlsignal 35 in einem Vorgang 41 empfangen. Das Kategorieauswahlsignal 35 korrespondiert zu einer Auswahl eines Benutzers. Und das Kategorieauswahlsignal 35 umfasst eine Information über eine gewählte Kategorie möglicher Primärziele 32. In einem weiteren Vorgang 42 wird ein Anzeigesignal 37 ansprechend auf das Kategorieauswahlsignal 35 erzeugt. Das Anzeigesignal 37 bewirkt eine Wiedergabe möglicher Primärziele 32 korrespondierend zu der Information der gewählten Kategorie. Das Anzeigesignal 37 bewirkt auch eine Wiedergabe von Sekundärzielen 33 zumindest einer anderen Kategorie in dem Kartenausschnitt 31. Eine Darstellung der Primärziele 32 der gewählten Kategorie unterscheidet sich von einer Darstellung der Sekundärziele 33 der anderen Kategorie.

Einer Kategorie ist eine Mehrzahl möglicher Ziele zugeordnet. Beispielsweise können diese Ziele in einem ähnlichen Themengebiet liegen.

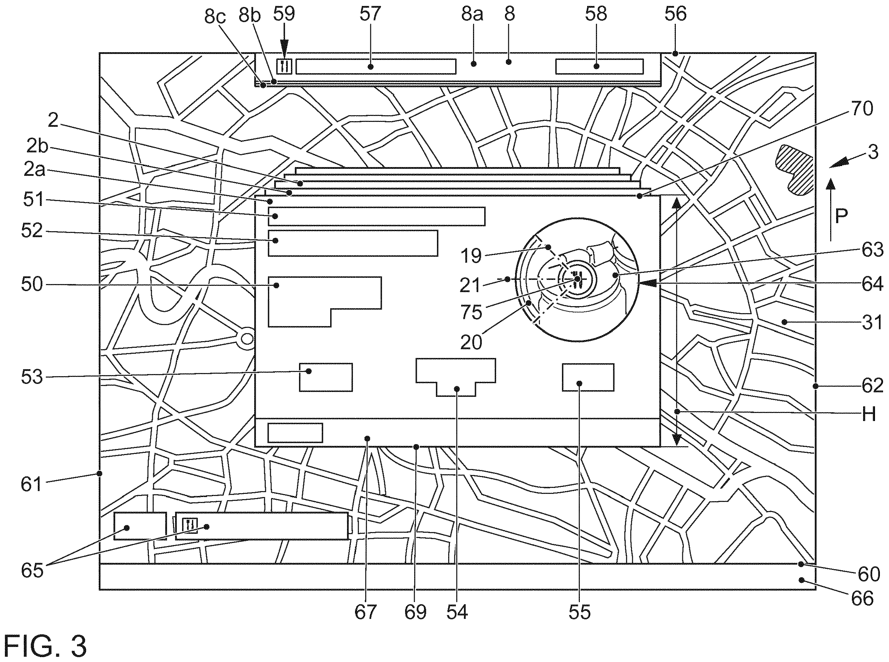

Fig. 3 zeigt eine schematische Darstellung einer Wiedergabe auf einer Anzeigefläche gemäß einem Ausführungsbeispiel in einer einfachen Ansicht (z.B. von einer Grundeinstellung einer Anzeige oder Default von engl.: "Standard").

Wie in Fig. 3 gezeigt, wird eine Mehrzahl von Anzeigebereichen 2 vor dem Hintergrund eines Kartenausschnitts 31 angezeigt. Dabei ist ein erster Anzeigebereich 2a in einem Vordergrund angezeigt, sodass er einen zweiten Anzeigebereich 2b in einem Hintergrund teilweise überlappt. Die vorderste Karteikarte bzw. der Anzeigebereich 2a ist in dem Vordergrund fixiert. Der zweite Anzeigebereich 2b überlappt einen dritten Anzeigebereich. Mit anderen Worten ausgedrückt, sind die Anzeigebereiche 2 als Karteikarten, die übereinander als Stapel angeordnet sind, dargestellt. Beispielsweise kann ein Kartenausschnitt 31 auf jedwede Art und Weise wiedergegeben werden. Beispielsweise kann der Kartenausschnitt 31 als Landkarte, Satellitendarstellung, 3D-Darstellung wiedergegeben werden. Beispielsweise können die Anzeigebereiche 2 nach einer Entfernung der Ziele, denen sie zugeordnet sind, sortiert sein. Beispielsweise können weitere Ziele als weitere Anzeigebereiche, die zwischen die bereits angezeigten Anzeigebereiche geschoben werden, hinzugefügt werden.

Jedem der Anzeigebereiche 2 ist eine Information zu einem möglichen Ziel oder einem Point of Interest zugeordnet. Ein Teil der Information, die dem Anzeigebereich 2 zugeordnet ist, kann in dem Anzeigebereich 2 dargestellt oder wiedergegeben sein. Bei dem Anzeigebereich 2a wird in einem Textfeld 50 ein Name des Ziels (z.B.: "JORIS BISTRO") oder Point of Interest wiedergegeben. In einem weiteren Adresstextfeld 51 wird eine Adresse des Ziels (z.B.: "Brunnenstraße 158, 17115 Berlin") wiedergegeben. In einem Entfernungsanzeigefeld 52 wird eine Entfernung (z.B.: "1236 METER") zu dem Ziel angegeben. Bei der Entfernung kann es sich dabei um einen Abstand von einem Standpunkt des Benutzers bis zu dem Ziel handeln. Dabei kann der Standpunkt beispielsweise ein tatsächlicher Standpunkt des Benutzers sein. Alternativ kann der Standpunkt auch ein von dem Benutzer gewählter virtueller Standpunkt sein. In einem Bewertungsfeld 53 wird eine Information über eine Bewertung des Ziels wiedergegeben. Dazu kann beispielsweise ein Wert (z.B.: "8.5") angezeigt werden. Frühere Besucher des Ziels können beispielsweise eine Bewertung des Ziels vorgenommen haben.

Der Anzeigebereich 2a weist auch ein Besucherfeld 54 auf. Dieses zeigt eine Anzahl von Besuchern an, die das Ziel bereits besucht haben. Ferner weist der Anzeigebereich 2a bei dem Ausführungsbeispiel der Fig. 3 ein weiteres Besucherfeld 55 auf. Dieses gibt eine Anzahl der Personen wieder, die sich aktuell an diesem Ziel aufhalten.

Bei einigen weiteren, nicht dargestellten Ausführungsbeispielen können in dem Anzeigebereich jedwede andere Information oder Kombination der genannten Felder dargestellt sein. Bei einigen weiteren, nicht dargestellten Ausführungsbeispielen kann auf der Anzeigefläche eine Information zu einer empfangenen GPS-Signalstärke dargestellt werden.

Wenn ein Benutzer einen Anzeigebereich 2a zu einem Ziel gesehen hat, kann er den Anzeigebereich 2a mit einer Auswahlgeste in einem Zwischenspeicher ablegen. Dazu kann der Benutzer den Anzeigebereich 2a bzw. die Karteikarte in Pfeilrichtung P nach oben schieben. An einem oberen Rand 56 der Anzeigefläche 3 wird dann das Hinweisfeld 8 eingeblendet. Das Hinweisfeld 8 korrespondiert zu der Information, die dem Anzeigebereich 2a, der über die Bewegung in Pfeilrichtung P in Richtung des oberen Rands geschoben wurde, zugeordnet ist. Bei dem Ausführungsbeispiel der Fig. 3 umfasst das Hinweisfeld 8 ein Textfeld 57. Das Textfeld 57 weist den Namen des Ziels auf, der dem Anzeigebereich 2a zugeordnet ist, der zu dem Hinweisfeld 8 korrespondiert. Wenn das Hinweisfeld 8 zu einer Mehrzahl von Anzeigebereichen 2 korrespondiert, kann das Textfeld 57 den Namen des Ziels aufweisen, der zu dem Anzeigebereich 2a korrespondiert, der als letztes in dem Zwischenspeicher abgelegt wurde. Alternativ kann das Textfeld 57 auch den Namen des Ziels aufweisen, das die geringste oder größte Entfernung zu dem aktuellen oder virtuellen Standort des Benutzers aufweist. Ferner weist bei dem Ausführungsbeispiel der Fig. 3 das Hinweisfeld 8 ein weiteres Entfernungstextfeld 58 auf. Das Entfernungstextfeld 58 umfasst eine Information zu einer Entfernung zwischen dem Standpunkt und dem Ziel. Dabei kann die Information zu der Entfernung eine Strecke oder eine Zeitdauer sein, die ein Benutzer benötigt, um das Ziel zu erreichen. Das Hinweisfeld 8 weist auch ein Informationsfeld 59 auf. Informationsfeld 59 kann eine weitere Information zu dem Ziel umfassen, zu dem das Hinweisfeld 8 korrespondiert. Beispielsweise kann das Informationsfeld 59 einen Hinweis zu einer Kategorie, der das Ziel zugeordnet ist, umfassen.

Bei dem Ausführungsbeispiel der Fig. 3 umfasst das Hinweisfeld 8 ein erstes Teilhinweisfeld 8a in einem Vordergrund, das ein zweites Teilhinweisfeld 8b in einem Hintergrund zumindest teilweise überlappt. Das Teilhinweisfeld 8b überlappt ein drittes Teilhinweisfeld 8c. Bei dem Ausführungsbeispiel der Fig. 3 wird also der Eindruck erweckt, dass die Anzeigebereiche 2, die in dem Zwischenspeicher abgelegt worden sind, auf einem Stapel liegen, dessen untere Kante an dem oberen Rand 56 der Anzeigefläche dargestellt ist. Dadurch kann beispielsweise angezeigt werden, dass das das Hinweisfeld 8 zu der Information einer Mehrzahl von Anzeigebereichen 2 korrespondiert.

Wenn ein Benutzer einen Anzeigebereich 2a nicht in den Zwischenspeicher an den oberen Rand 56 der Anzeigefläche 3 schieben möchte, kann er den Anzeigebereich 2a mit einer Bewegung, die der Pfeilrichtung P entgegengerichtet ist, löschen. Die Bewegung kann also zu einem unteren Bildrand 60 gerichtet sein. Dann verschwindet beispielsweise der Anzeigebereich 2a, der in dem Vordergrund angezeigt wird und der Anzeigebereich 2b wird in dem Vordergrund angezeigt.

Mit anderen Worten ausgedrückt, bietet die Ansteuereinrichtung 1 die Möglichkeit viele Ziele bzw. Points of Interest als Anzeigebereich 2 auf einem Kartenausschnitt 31 darzustellen. Ferner können die Ziele oder Anzeigebereiche 2 in eine Zwischenablage oder einen Zwischenspeicher geschoben werden. Zur Bedienung der Anzeigefläche 3 kann der Benutzer den Anzeigebereich 2 bzw. die Karteikarte nach oben schieben (z.B.: Flick-Up von engl.: "nach oben Schieben") und für später archivieren. Beispielsweise können die Anzeigebereiche 2 so überlappend dargestellt werden, dass Anzeigebereiche 2 einer geringeren Entfernung in dem Vordergrund dargestellt werden. Diese Sortierung kann beispielsweise auch in der Zwischenablage beibehalten werden. Mit einer weiteren Bedienbewegung (z.B.: Flick-Down von engl.: "nach unten Schieben") kann die Karteikarte bzw. der Anzeigebereich 2 von der Anzeigefläche 3 ausgeblendet werden. Die Karteikarte verschwindet also von der Anzeigefläche 3 (z.B. Screen). Es kann eine automatische Ausblendung in einen Bildschirmschonermodus (v. engl.: "Screensaver-Modus") erfolgen. Ein Löschen kann beispielsweise nicht mehr rückgängig gemacht werden. Wenn der Benutzer die zwischengespeicherten Ziele bzw. Points of Interest bzw. Informationen, die zu dem Hinweisfeld 8 korrespondieren, sehen möchte, kann er diese über eine Auswahlgeste wieder aufrufen. Beispielsweise kann er dazu einfach eine Bedienbewegung in der Nähe des Hinweisfelds 8 ausführen. So kann der Benutzer beispielsweise einen Anzeigebereich 2, der zu dem Teilhinweisfeld 8a korrespondiert, wieder auf den Karteikartenstapel bzw. den Anzeigebereich 2 legen. Ferner kann der Benutzer, wenn er alle Anzeigebereiche 2, die in der Mitte des Kartenabschnitts 31 dargestellt sind, gesehen hat, sich alle zwischengespeicherten Anzeigebereiche ansehen.

Mit der Ansteuereinrichtung 1 wird also die Möglichkeit geboten, Points of Interest bzw. Ziele zu sortieren oder auszuwählen. Die Informationen können beispielswiese aus dem Internet, einem anderen Netzwerk, einem sozialen Netzwerk (z.B. Foursquare von engl.: "viereckig") oder einem Speichermedium stammen. Beispielsweise können über das Internet in einer Umgebung gefundene Ziele oder Points of Interest als Stapel dargestellt werden. Beispielsweise können Ziele oder Points of Interest in einem Zwischenspeicher abgelegt oder gelöscht werden. Die Ziele können auch wieder aus dem Zwischenspeicher abgeholt werden. Beispielsweise kann ein Benutzer eine gewisse Vorauswahl zum Darstellen der Ziele oder Points of Interest generieren. Der Benutzer kann dazu evtl. eine Kategorie auswählen. Eine Mehrzahl von Zielen kann einer bestimmten Kategorie zugeordnet sein. Zu jedem der Ziele können Informationen angezeigt werden. Diese Informationen können ggf. eine Adresse des Ziels, eine Information, wie viele Mitglieder eines Netzwerks sich aktuell an dem Ziel befinden bzw. den Point of Interest besuchen, wie viele Leute des gleichen Netzwerks den Point of Interest bereits besucht haben, eine Entfernung zu dem Ziel, ein Name des Ziels, eine Kategorie des Ziels, eine Bewertung des Ziels, eine gesamte Besucheranzahl (z.B. Check Ins, von engl.: "Registrierungen") und/oder eine Anzahl von Besuchern, die sich aktuell an dem Ziel befinden, sein.

Wenn der Benutzer den Anzeigebereich 2a zu einem anderen Ziel oder die Karte sehen möchte, den alten jedoch behalten möchte, kann er den Anzeigebereich 2a bzw. die Karteikarte mit einer Auswahlbewegung in die Zwischenablage schieben. Dazu kann er den Point of Interest bzw. den Anzeigebereich 2a beispielsweise nach oben schieben. Soll der Anzeigebereich 2a für diese Session bzw. das aktuelle Auswahlverfahren gelöscht werden, kann der Benutzer den Anzeigebereich 2a beispielsweise nach unten schieben. Bei manchen Ausführungsbeispielen können also die letzten angeschauten Orte bzw. Ziele oder Points of Interest (z.B. POI's) gespeichert und beispielsweise durch eine Wischgeste angezeigt werden. Ferner können die letzten angeschauten Orte bzw. Ziele oder Points of Interest auswählbar sein.

Bei einigen weiteren nicht dargestellten Ausführungsbeispielen kann die Auswahlgeste, um den Anzeigebereich 2a in den Zwischenspeicher zu schieben in jedwede Richtung führen. Beispielsweise könnte der Benutzer den Anzeigebereich 2a dazu zu einem linken Seitenrand 61 oder zu einem rechten Rand 62 oder zu einem unteren Rand 60 schieben. Beispielsweise könnte der Benutzer dazu den Anzeigebereich 2a auch in Richtung der Ecken der Anzeigefläche 3 schieben. Eine Bewegung, um den Anzeigebereich 2a zu löschen, könnte dann der entsprechenden Bewegung zum Speichern des Anzeigebereichs 2a entgegen gerichtet sein.

Wenn die Anzeigebereiche 2 bzw. Ziele oder Points of Interest über das Hinweisfeld 8 aus der Zwischenablage 8 abgeholt werden, können die Anzeigebereiche 2 in einer hier nicht illustrierten Art der Darstellung auch nebeneinander dargestellt werden. Die Anzeigebereiche 2 können dabei beispielsweise so weit wie möglich von links bzw. von rechts eingeblendet werden. So können beispielsweise neue Orte dazwischen hinzugefügt werden. Dabei können sich die Anzeigebereiche 2 dann ggf. nicht überlappen. Beispielsweise kann dies der Fall sein, wenn der Benutzer den ganzen Kartenstapel der Anzeigebereiche 2 durchgeblättert hat. Beispielsweise können die Anzeigebereiche 2 horizontal nebeneinander auf der Anzeigefläche 3 dargestellt werden. Bei einigen weiteren Ausführungsbeispielen können die Anzeigebereiche 2 in jedwedem Muster, nicht überlappend, auf der Anzeigefläche 3 dargestellt werden. Wenn beispielsweise die Anzeigefläche 2 nicht ausreicht, um alle zwischengespeicherten Anzeigebereiche 2 oder Ziele auf der Anzeigefläche 3 darzustellen, können diese beispielsweise horizontal oder vertikal verschoben werden.

Ferner wird auf der Anzeigefläche 3 ein Filterfeld 65 dargestellt ist. Dieses zeigt an, welchen Filter der Benutzer zur Auswahl der Anzeigebereiche 2 oder der Ziele der Anzeigebereiche 2 gewählt hat. Der Filter kann beispielsweise eine Kategorie sein. Die Kategorie kann ggf. über ein Icon (von engl.: "Bildzeichen") auswählbar sein. Unter Umständen kann das Icon eine Information anzeigen, die wiedergibt, welche Ziele über dieses Icon angezeigt werden können. Das Icon kann dazu einen Text umfassen. Der Text kann z. B. "Ich möchte nur Gaststätten angezeigt bekommen" lauten. Ferner kann der Text anstelle der Kategorie "Gaststätte" einen Namen einer anderen Kategorie beinhalten. Das Icon kann ggf. auch ein später noch beschriebener Kategorieauswahlbereich 34 sein.

Beispielsweise kann als Filter auch eine bestimmte Zeitdauer gewählt werden, innerhalb der die angezeigten Ziele (z.B.: 10 min) erreichbar sein sollen. Ferner kann das Filterfeld 65 auch die Zeitdauer, in der die angezeigten Ziele erreichbar sein sollen, anzeigen. Beispielsweise können solche Auswahlkriterien kombiniert sein. Beispielsweise können Ziele einer bestimmten Kategorie, die sich innerhalb einer bestimmten Zeitdauer erreichen lassen, als Filter gesetzt sein. Diese gewählten Filterkriterien können beispielsweise in dem Filterfeld 65 zur Information des Benutzers dargestellt werden. Beispielsweise ist die Entfernung zu dem Ziel durch den Benutzer in einer Zeit oder in einer Strecke wählbar. Dadurch, dass der Benutzer eine Zeit angeben kann, kann bei manchen Ausführungsbeispielen ermöglicht werden, dass der Benutzer die tatsächliche Zeit, die benötigt wird um die Ziele zu erreichen, direkt vergleichen kann. Beispielsweise kann das Filterfeld 65 in der Nähe eines unteren Bildrands 60 angezeigt werden.

Andere Filtermöglichkeiten können beispielsweise eine aktuelle Temperatur sein. Beispielsweise kann die Ansteuereinrichtung dazu Informationen zur Temperatur erhalten. Beispielsweise werden unter einer bestimmten Grenztemperatur keine Ziele angezeigt, die eine Eisdiele, ein Freibad oder dergleichen sind. Weitere Filtermöglichkeiten können ggf. auch eine Zeit, beispielsweise eine Tageszeit oder eine Jahreszeit bzw. ein Datum sein. Die Ziele können also bei manchen Ausführungsbeispielen tageszeitabhängig oder jahreszeitabhängig gefiltert werden. Zum Beispiel wird dann im Winter kein Freibad oder tagsüber kein Theater als Ziel angezeigt. Ergänzend oder alternativ werden ggf. keine Freizeitparks als Ziele angezeigt, wenn ein Benutzer beruflich unterwegs ist.

Ferner kann auf der Anzeigefläche 3 eine Statusleiste 66 angezeigt werden. Beispielsweise kann auf der Statusfläche 66 ein Name und eine Adresse des Ziels, das dem Anzeigebereich 2a in dem Vordergrund zugeordnet ist, angegeben sein.

Der Anzeigebereich 2a kann einen Informationsbereich 67 aufweisen. Beispielsweise kann der Benutzer über den Informationsbereich 67 weitere Informationen oder Tipps zu dem Ziel aufrufen. Beispielsweise kann der Informationsbereich 67 ein Textfeld aufweisen, in dem angegeben wird, wie viele weitere Informationen oder Tipps zu dem Ziel des obersten Anzeigebereichs 2a vorhanden sind. Beispielsweise können diese Tipps von anderen Benutzern oder Usern (von engl.: "Benutzer") des Netzwerks stammen.

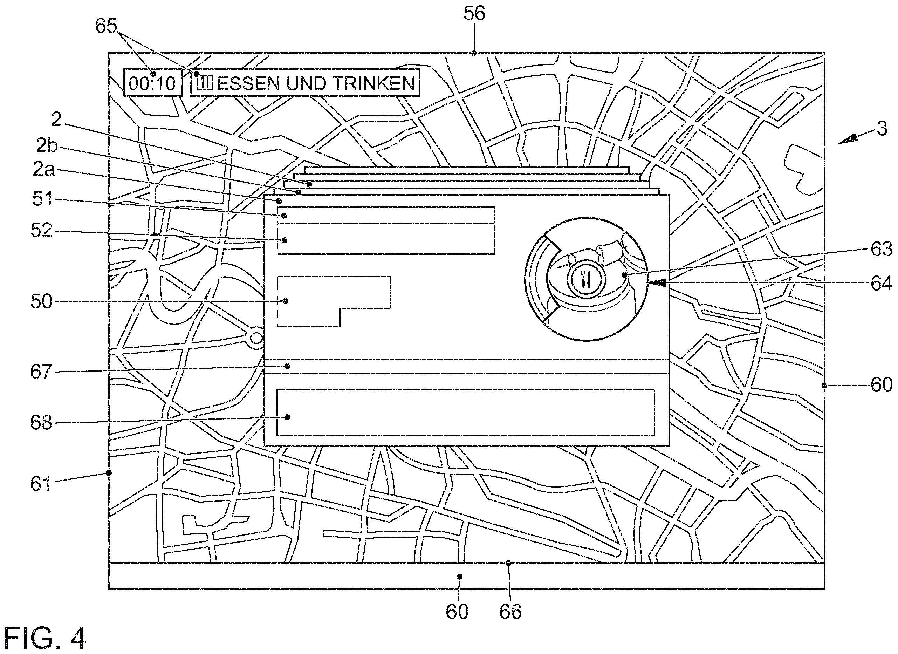

Wenn ein Benutzer über eine Bedienbewegung an dem Informationsbereich 67 diese Tipps aufruft, erfolgt eine Wiedergabe der Anzeigefläche 3, wie in Fig. 4 dargestellt. Zum Einblenden der Tipps kann der Benutzer beispielsweise einen unteren Bereich des Anzeigebereichs 2a berühren (z.B. Single-Tab, von engl.: "einfach Berühren" von auf der Karteikarte). Beispielsweise kann dieser Bereich 1/3 einer Höhe des Anzeigebereichs 2a einnehmen, von einem unteren Rand 69 des Anzeigebereichs 2a aus.

Fig. 4 zeigt eine schematische Darstellung einer Wiedergabe auf einer Anzeigefläche gemäß einem weiteren Ausführungsbeispiel.

Wie in Fig. 4 gezeigt, sind nach dem Aufrufen der Tipps in dem Anzeigebereich 2a nur noch das Textfeld 50 mit dem Namen des Ziels und das Adresstextfeld 51 und das Entfernungsanzeigefeld 52 und die Richtungsangabe 64 eingeblendet. Mit anderen Worten ausgedrückt, kann der Anzeigebereich 2a vereinfacht dargestellt sein. Dabei kann das Entfernungsanzeigefeld 52 vergrößert dargestellt sein. In einem Tippfeld 68 kann beispielsweise eine Empfehlung oder ein Kommentar eines Benutzers zu dem Ziel angezeigt sein. Mit anderen Worten ausgedrückt, lassen sich die Tipps also optional einblenden. Dabei kann dann ein sogenannter Bildschirmschonermodus unterbrochen werden. Wenn eine Mehrzahl solcher Tipps oder Tippfelder vorhanden sind, können diese beispielsweise durch eine Bedienbewegung aufgerufen werden. Beispielsweise kann die Bedienbewegung von einem rechten Rand 60 der Anzeigefläche 3 zu einem linken Rand 61 der Anzeigefläche 3 verlaufen. Es kann also in einem Bereich des Tippfeldes 68 beispielsweise per Swipe (von. engl.: "Schieben") geblättert werden. Alternativ kann die Bedienbewegung in die entgegengerichtete Richtung ausgeführt werden.

Beispielsweise kann, wenn an dem Anzeigebereich 2a in die sogenannte Tippansicht der Fig. 4 gewechselt wird, das Filterfeld 65 an einer anderen Position dargestellt werden. Bei der Fig. 3 ist das Filterfeld 65 in der Nähe eines unteren Bildrands 60 angezeigt. Bei der Fig. 4 ist das Filterfeld 65 in der Nähe eines oberen Anzeigerandes 56 dargestellt.

Der Benutzer kann beispielsweise eine Kategorie über eine Bedienbewegung in einem Bereich des Filterfelds 65 wählen. Beispielsweise kann mit einem Tap (von engl.: "Berühren"; z.B. einer kurzen Berührung) auf das Filterfeld 65 eine Kategorie oder Filtereinstellung aufgerufen werden. Analog kann der Benutzer eine Entfernung ebenfalls über einen Tap auf das Filterfeld auswählen. Ein Tap auf das Filterfeld 65 kann also beispielsweise zu einer anderen Kategorie bzw. einer Entfernung, in der die Ziele des angezeigten Anzeigebereichs 2 liegen, führen.

Ferner kann ein Benutzer einen Anzeigebereich 2a mit einer weiteren Auswahlgeste (z.B.: Single-Tab, also eine einfachen Berührung) für andere Bereiche oder Funktionen nutzen bzw. zur Verfügung stellen. Beispielsweise kann der Anzeigebereich 2a dann in einer Fotogalerie abgelegt werden, zum Teilen in einem Netzwerk oder zum Ablegen in einem anderen Speicher verwendet werden. Dazu kann sich die Karte bzw. der Anzeigebereich 2a beispielsweise drehen. So könnte beispielsweise markiert werden, dass der Anzeigebereich 2a für diese andere Funktion verwendet wird. Beispielsweise kann diese Bedienbewegung in einem oberen Bereich des Anzeigebereichs erfolgen. Dieser Bereich kann ca. 2/3 einer Höhe H des Anzeigebereichs 2a einnehmen.

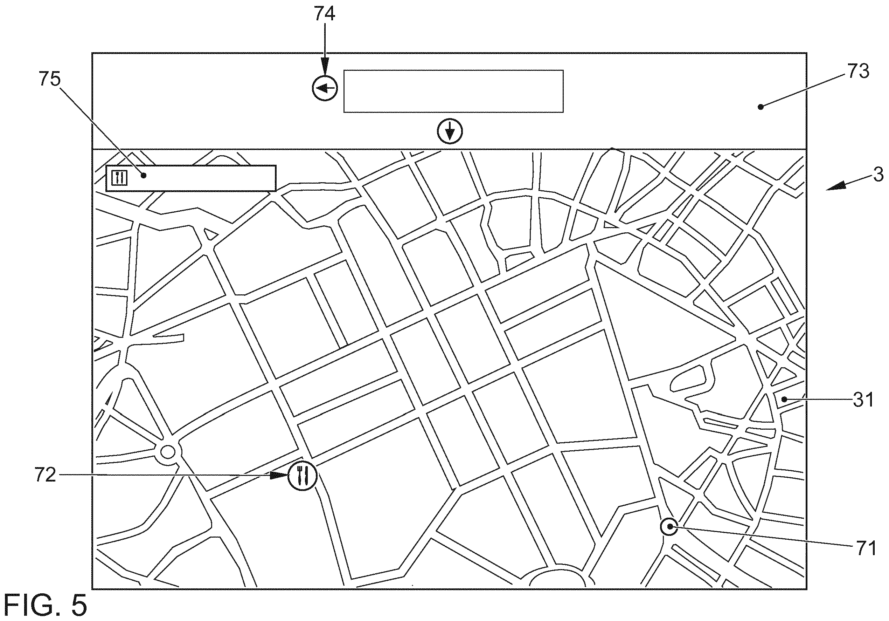

Durch eine Bedienbewegung in dem Bereich der Navigationsleiste 66 kann eine Navigationsanzeige wie in Fig. 5 gezeigt, aufgerufen werden. Die Navigation kann zu dem Ziel, das dem Anzeigebereich 2a in dem Vordergrund zugeordnet ist, generiert werden.

Fig. 5 zeigt eine schematische Darstellung einer Wiedergabe auf einer Anzeigefläche gemäß einem weiteren Ausführungsbeispiel.

Wie in Fig. 5 gezeigt, wird auf dem Kartenausschnitt 31 ein aktueller Standpunkt 71 des Benutzers angezeigt. Es ist auch ein Ziel 72 markiert. Dabei handelt es sich um eine Position des Ziels 72, das dem Anzeigebereichs 2a zugeordnet ist. In einem oberen Bereich der Anzeigefläche 3 können in einer Statusleiste 73 eine Entfernung in Metern zu dem Ziel 72 und eine Adresse des Ziels 72 angegeben sein.

Ferner kann mit einem Pfeilsymbol 74 eine Richtung, in der sich das Ziel 72 von dem Standpunkt 71 des Benutzers aus befindet, angegeben werden. Mit anderen Worten ausgedrückt kann in einem oberen Bereich die Entfernung als spätere Angabe für die Navigation eingeblendet werden. Das Pfeilsymbol 74 befindet sich ebenfalls in der Statusleiste 73. Auf dem Kartenausschnitt 31 ist in einem Textfeld 75 ein Name des Ziels 72 und ggf. eine Kategorie des Ziels 72 eingeblendet.

Bei einigen weiteren, nicht dargestellten Ausführungsbeispielen kann auf einzelne dieser Angaben verzichtet werden. Ferner können andere Angaben eingeblendet sein.

Dann kann eine sprach-, text- oder symbolbasierte Navigationsanleitung von dem Standpunkt 71 des Benutzers zu dem Ziel 72 erfolgen. Es kann also eine Navigation zu dem Ziel 72, das zu dem aktuellen Anzeigebereich 2 korrespondiert, angezeigt werden. Beispielsweise kann der Kartenausschnitt 31 für die Navigation vergrößert und/oder verkleinert (z.B. gezoomt) werden. So könnten beispielsweise die aktuelle Position 71 und das Ziel 72 besser erkannt werden. Die Angaben zu der Navigation können beispielsweise von unten eingeblendet werden. Bei dem Ziel 72 handelt es sich um das Ziel, das dem obersten Anzeigebereich 2a aus der Ansicht der Fig. 3 zuvor zugeordnet ist. Es handelt sich also um das Ziel 72 der aktiven Karteikarte aus der vorhergehenden Ansicht.

Der Anzeigebereich 2a weist eine Richtungs- und/oder Entfernungsanzeige 64 auf. Diese korrespondiert zu einem Ziel, das dem Anzeigebereich 2a zugeordnet ist. Der Anzeigebereich weist auch ein Bild 63 auf, das zu dem Ziel des Anzeigebereichs korrespondiert. Die Richtungs- und Entfernungsanzeige 64 ist vor dem Hintergrund des Bildes 63 dargestellt.

Bei einigen weiteren Ausführungsbeispielen kann die Richtungs- und Entfernungsanzeige 64 unabhängig von dem Bild 63 bzw. das Bild 63 unabhängig von der Richtungs- und Entfernungsanzeige 64 angezeigt werden. Die Ziele bzw. Points of Interest können also bei manchen Ausführungsbeispielen mit einem Bild oder Foto geladen und angezeigt werden.

Die auf dem Anzeigebereich 2a wiedergegebene Richtungs- und Entfernungsanzeige 64 zeigt auf optisch einfache Art und Weise eine Richtung und eine Entfernung, in der das Ziel 72 von einem Standpunkt eines Benutzers aus gesehen liegt. Dazu weist die Richtungs- und Entfernungsanzeige 64 einen Bogenabschnitt 20 auf. Bei dem Ausführungsbeispiel der Fig. 3 ist der Bogenabschnitt 20 ein Kreisbogenabschnitt.

Bei weiteren nicht dargestellten Ausführungsbeispielen kann der Bogenabschnitt auch als Ellipsenbogenabschnitt ausgebildet sein.

Der Bogenabschnitt 20 überdeckt einen Winkelbereich 19. Der Winkelbereich 19 korrespondiert zu einer Entfernung des Ziels 72. Je größer der Winkelbereich 19 ist, desto größer ist die Entfernung zu dem Ziel 72. Dabei kann eine maximale Entfernung einem Winkelbereich von 180° entsprechen. Eine Position der Mittelachse 21 des Winkelbereichs 19 entspricht einer Richtung, in der das Ziel 72 liegt. Dadurch, dass der Winkelbereich 19 bei einer größeren Entfernung größer ist, kann für einen Benutzer bei manchen Ausführungsbeispielen auch die Richtungsangabe nicht so genau erscheinen. Wenn sich der Benutzer dem Ziel 72 nähert, verkleinert sich der Winkelbereich 19. Dadurch kann die Richtungsangabe bei manchen Ausführungsbeispielen genauer erscheinen, weil die Mittelachse 21 in dem kleineren Winkelbereich 19 liegt.

Bei einigen weiteren, nicht dargestellten Ausführungsbeispielen kann der Winkelbereich auch so zu der Entfernung korrespondieren, dass je größer der Winkelbereich ist, desto kleiner ist die Entfernung zu dem Ziel.

Der Bogenabschnitt 20 wird vor dem Hintergrund des Bildes 63 angezeigt, das zu dem Ziel 72 das dem Anzeigebereich 2 zugeordnet ist, korrespondiert. Beispielsweise kann das Bild ein Foto des Ziels sein. Ferner wird an einem Mittelpunkt 57 des Bogenabschnitts 20 eine Information zu der Kategorie, zu der das Ziel 72 gehört, angezeigt. Der Bogenabschnitt 20 ist konzentrisch zu dem kreisscheibenförmigen Bild 63 angeordnet. Das Bild 63 wird in dem Bereich des Winkelabschnitts 19 bzw. in einem Kreisringabschnitt im Bereich des Winkelbereichs 19 in einem anderen Kontrast dargestellt als außerhalb des Winkelbereichs 19. So könnte Bogenabschnitt 20 für den Benutzer besser erkennbar sein.

Bei einigen weiteren, nicht dargestellten Ausführungsbeispielen kann der Bogenabschnitt auch vor jedwedem anderen Hintergrund dargestellt sein.

Beispielsweise kann sich die Größe des Winkelbereichs 19 linear zu der Entfernung verhalten. Ferner können eine Mehrzahl von Entfernungen einem Winkelbereich 19 zugeordnet sein. So könnten beispielsweise sehr große Entfernungen mit einem Winkelbereich 19 dargestellt werden, der etwas kleiner als 180° ist. Kleinere Entfernungen könnten dann in feineren Abstufungen dargestellt werden. Beispielsweise kann die Entfernung, zu der der Winkelbereich 19 korrespondiert, eine Zeitangabe einer Zeit sein, in der für einen Benutzer, z.B. auch unter Berücksichtigung der momentanen Verkehrslage, das Ziel erreichbar ist.

Bei einigen weiteren Ausführungsbeispielen ist die Wiedergabe der Richtungs- und Entfernungsanzeige 64 nicht auf den Anzeigebereich beschränkt. Beispielsweise kann die Richtungs- und Entfernungsanzeige 64 in einer Vielzahl von Anwendungen, beispielsweise Routenplanern und Navigationsgeräten, eingesetzt werden.

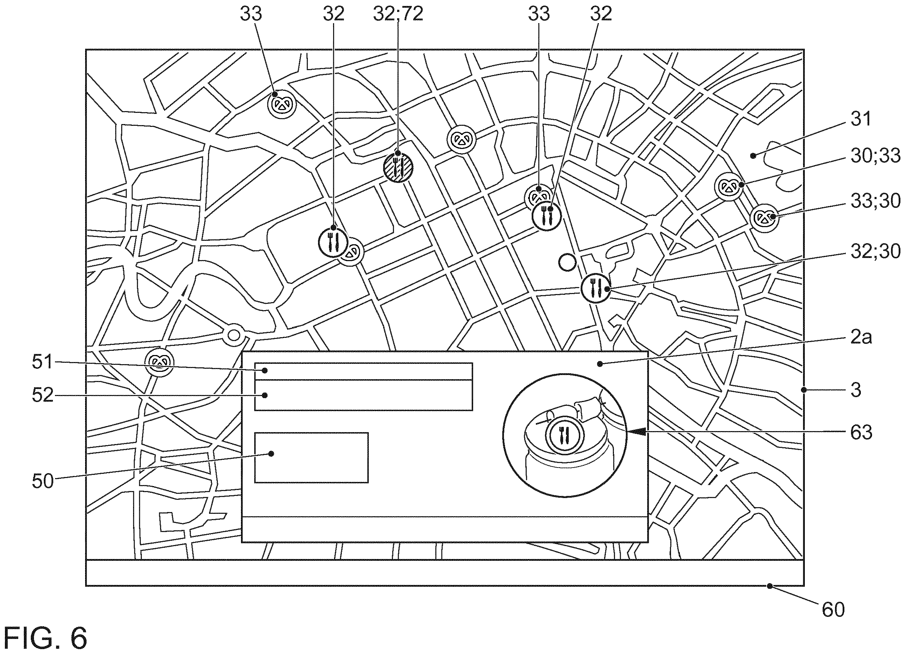

Mit einer weiteren Bedienbewegung, beispielsweise einem zweifachen Berühren (z.B.: Doppelklick, Doppel-Tap) des obersten Anzeigebereichs 2a kann eine Wiedergabe auf der Anzeigefläche 3, wie in Fig. 6 dargestellt, erfolgen.

Fig. 6 zeigt eine schematische Darstellung einer Wiedergabe auf einer Anzeigefläche gemäß einem weiteren Ausführungsbeispiel. Bei der in Fig. 6 dargestellten Anzeige, kann es sich um eine sogenannte erweiterte Ansicht handeln.

Bei der in Fig. 6 gezeigten Wiedergabe auf der Anzeigefläche 3 ist der Anzeigebereich 2a verkleinert und in Nähe eines unteren Rands 60 der Anzeigefläche 3 dargestellt. Das Ziel 72, das zu dem Anzeigebereich 2a korrespondiert, ist in dem Kartenausschnitt 31 markiert dargestellt.

Bei weiteren nicht dargestellten Ausführungsbeispielen kann der Anzeigebereich in normaler Größer und an jedweder anderen Position der Anzeigefläche dargestellt sein. Beispielsweise kann der Anzeigebereich so angezeigt werden, dass er das Ziel, zu dem er korrespondiert, nicht verdeckt.

Ferner sind in dem Kartenausschnitt 31 auch andere Ziele 30, die der gleichen Kategorie wie das Ziel 72 zugeordnet sind, eingeblendet. Diese Ziele 30 sind sogenannte Primärziele 32. Ergänzend werden auf dem Kartenausschnitt 31 auch sogenannte Sekundärziele 33 eingeblendet. Bei den Sekundärzielen 33 handelt es sich um Ziele, die einer anderen Kategorie als der gewählten zugeordnet sind. Mit anderen Worten ausgedrückt sind die Sekundärziele 33 einer anderen Kategorie als das Ziel 72 des Anzeigebereichs 2a zugeordnet.

Die Darstellung der Sekundärziele 33 unterscheidet sich von der Darstellung der Primärziele 32. Dies kann beispielsweise durch Symbole erfolgen, die sich unterscheiden. Ferner kann eine farbliche Markierung unterschiedlich sein. Ferner können sich die Markierungen beispielsweise durch unterschiedliche Schraffuren unterscheiden. Bei dem Ausführungsbeispiel der Fig. 6 können die Sekundärziele 33 nur schwarz-weiß oder nur grau markiert sein. Die Primärziele 32 können beispielsweise farbig hervorgehoben werden. Das aktuelle Primärziel 72, das zu dem Anzeigebereich 2a korrespondiert, kann in einer anderen Farbe als die anderen Primärziele 32 markiert sein. Bei dem Ausführungsbeispiel der Fig. 6 sind alle Ziele der Kategorie Essen zugeordnet. Einer Kategorie können beispielsweise eine Mehrzahl von Subkategorien oder zumindest ein Ziel zugeordnet sein. Alle Primärziele 32 können beispielsweise mit dem gleichen Symbol markiert sein. Bei dem Ausführungsbeispiel der Fig. 6 zeigt das Symbol eine Gabel und ein Messer. Dadurch kann beispielsweise erkennbar sein, dass alle Primärziele einer Kategorie, beispielsweise der Subkategorie Restaurant, zugeordnet sind. Die Sekundärziele 33 sind mit anderen Symbolen, beispielsweise einer Brezel, markiert. Dadurch kann bei manchen Ausführungsbeispielen erkennbar sein, dass diese einer anderen Subkategorie, beispielsweise bayrischem Essen zugeordnet sind.

Mit anderen Worten ausgedrückt, kann beispielsweise bei einer einfachen Berührung (z.B.: einem Tap) auf die Anzeigefläche 3 bzw. den Anzeigebereich 2a zu der erweiterten Ansicht der Fig. 6 gewechselt werden. Der Anzeigebereich 2a bzw. die Karteikarte wird dabei kleiner und verschiebt sich nach unten. Das Ziel 72 der aktiven Karteikarte bzw. des Anzeigebereichs 2a kann markiert hervorgehoben werden. Die Wiedergabe vergleichbarer Orte, also anderer Primärziele 32 der gleichen Kategorie, kann beispielsweise in grün erfolgen. Orte anderer Kategorien, also die Sekundärziele 33 können beispielsweise in grau angezeigt werden.

Bei einigen weiteren, nicht dargestellten Ausführungsbeispielen kann erst bei einer entsprechenden Auswahlgeste (z.B.: Tap auf ein Symbol oder Icon auf dem Anzeigebereich 2a) der Ort bzw. das Ziel 72 der Karteikarte angezeigt bzw. markiert werden. Mit einer weiteren Auswahlgeste eines Benutzers (z.B.: Tap auf den Anzeigebereich) kann beispielsweise zurück in die Ansicht der Fig. 3 gewechselt werden.

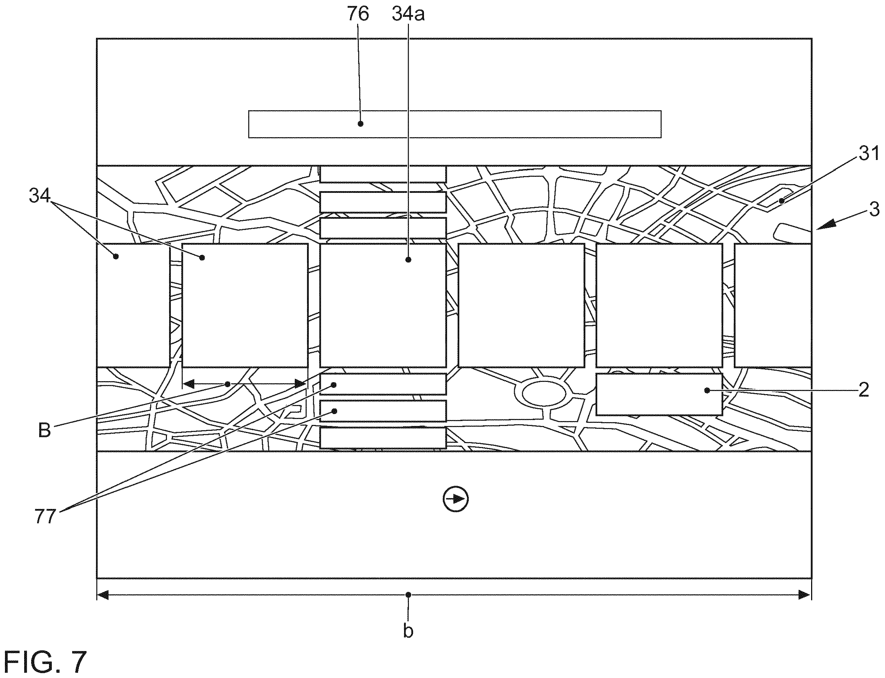

Fig. 7 zeigt eine schematische Darstellung einer Wiedergabe auf einer Anzeigefläche gemäß einem weiteren Ausführungsbeispiel. Diese dient zum Auswählen der Kategorien in der mögliche Ziele liegen sollen.

Wie in Fig. 7 dargestellt, ist auf der Anzeigefläche vor dem Hintergrund des Kartenabschnitts 31 eine Mehrzahl von Kategorieanzeigebereichen 34 dargestellt. Beispielsweise kann der Kartenabschnitt zu einem Standpunkt des Benutzers korrespondieren. Beispielsweise kann der Standpunkt des Benutzers in dem Kartenabschnitt liegen.

Bei weiteren, nicht dargestellten Ausführungsbeispielen können die Kategorieanzeigebereiche 34 auch vor einem Hintergrund, der kein Kartenabschnitt ist, angezeigt werden.

Beispielsweise kann ein Informationsfeld 76 eingeblendet werden. Dieses kann einen Hinweis an den Benutzer enthalten, eine Kategorie auszuwählen. Dieser Hinweis kann beispielsweise lauten: "Bitte wählen Sie eine oder mehrere Kategorien aus". Beispielsweise kann der Benutzer auch eine Mehrzahl von Kategorien auswählen. Die Kategorieauswahlbereiche 34 können horizontal nebeneinander angeordnet sein. Beispielsweise können die Kategorieauswahlbereiche 34 so angeordnet sein, dass sie sich nicht überlappen. Wenn eine Summe der Breiten B der Kategorieauswahlbereiche 34 eine Gesamtbreite b der Anzeigefläche 3 übersteigt, können diese beispielsweise mit einer Bedienbewegung über die Anzeigefläche 3 geschoben werden. Ferner kann beispielsweise jedem der Kategorieauswahlbereiche 34 eine Mehrzahl von Zielen 30 zugeordnet sein. Ferner kann einem Kategorieauswahlbereich 34a eine Mehrzahl von Subkategorieauswahlbereichen 77 zugeordnet sein. Jedem der Subkategorieauswahlbereiche 77 kann eine Mehrzahl von Zielen 30 zugeordnet sein. Beispielsweise kann eine Kategorie "Restaurant" sein. Beispielsweise kann eine Subkategorie eine Art des Essens sein, das in diesen Restaurants serviert wird.

Ferner kann bei der Anzeige der Fig. 7 auch ein Anzeigebereich 2 angezeigt werden. Diesem kann eine Information zu einem Ziel zugeordnet sein, das der Benutzer zuletzt besucht hat.

Mit anderen Worten ausgedrückt, bietet die Wiedergabe auf der Anzeigefläche 3 nach der Fig. 7 die Möglichkeit eine Vorauswahl zumindest einer Kategorie zu treffen. Beispielsweise können Hauptkategorien dabei horizontal und Subkategorien dabei vertikal angeordnet sein. Ferner kann ein Assistent für eine Entfernung angezeigt oder aufgerufen werden. Die Entfernung kann beispielsweise als eine Zeitdauer angegeben werden.

Zusammenfassend betreffen Ausführungsbeispiele eine Ansteuereinrichtung 1 zum Markieren einer Mehrzahl möglicher Ziele 30 in einem Kartenausschnitt 31 auf einer Anzeigefläche 3. Die Ansteuereinrichtung 1 umfasst eine Eingangseinrichtung 4. Die Eingangseinrichtung 4 ist ausgebildet, um ein Kategorieauswahlsignal 35 zu empfangen. Das Kategorieauswahlsignal 35 korrespondiert zu einer Auswahl eines Benutzers. Das Kategorieauswahlsignal 35 umfasst eine Information über eine gewählte Kategorie möglicher Primärziele 32. Ferner umfasst die Ansteuereinrichtung 1 einen Controller 6. Der Controller 6 ist ausgebildet, um ansprechend auf das Kategorieauswahlsignal 35 ein Anzeigesignal 37 zu erzeugen. Das Anzeigesignal 37 bewirkt eine Wiedergabe möglicher Primärziele 32, korrespondierend zu der Information der gewählten Kategorie. Ferner bewirkt das Anzeigesignal 37 auch eine Wiedergabe von Sekundärzielen 33 zumindest einer anderen Kategorie in dem Kartenausschnitt 31. Eine Darstellung der Primärziele 32 der gewählten Kategorie unterscheidet sich dabei von einer Darstellung der Sekundärziele 33 der anderen Kategorie.

Ergänzend oder alternativ kann die Eingangseinrichtung 4 ausgebildet sein, um ein Eingangssignal mit einer Information zu einer Entfernung und einer Richtung zu einem Ziel 30, 23, 33 72 zu empfangen. Der Controller 6 kann ausgebildet sein, um ein Anzeigesignal zu erzeugen, das eine Darstellung eines einen Winkelbereich 19 überdeckenden Bogenabschnitts 20 auf der Anzeigefläche 3 bewirkt, wobei eine Größe des Winkelbereichs 10 zu der Information über die Entfernung und eine Position einer Mittelachse 21 des Winkelbereichs 19 zu der Information über die Richtung des Ziels 30, 23, 33 72 korrespondiert.

Gemäß einigen Ausführungsbeispielen ist der Controller 6 ausgebildet, um die Größe des Winkelbereichs 19 aus der Information über die Entfernung des Ziels 30, 23, 33 72 zu Berechnen.

Gemäß einigen Ausführungsbeispielen ist die Information zu der Entfernung eine Zeit. Ergänzend oder alternativ kann die Information zu der Entfernung eine Strecke sein.

Gemäß einigen Ausführungsbeispielen ist der Controller 6 ausgebildet, um eine Position der Mittelachse 21 aus einer Information über die Richtung des Ziels 30, 23, 33 72 zu Berechnen.

Gemäß einigen Ausführungsbeispielen ist der Controller 6 ausgebildet, um das Anzeigesignal so zu erzeugen, dass der Winkelbereich 19 bei einer ersten Entfernung, die kleiner ist als eine zweite Entfernung, kleiner ist als bei der zweiten Entfernung.

Gemäß einigen Ausführungsbeispielen ist der Controller 6 ausgebildet, um das Anzeigesignal so zu erzeugen, dass eine Größe des Winkelbereichs 19 linear zu einer Entfernung ist.

Gemäß einigen Ausführungsbeispielen ist der Controller 6 ausgebildet, um das Anzeigesignal so zu erzeugen, dass einer Mehrzahl von Entfernungen, die in einem Wertebereich liegen, zu einem Winkelbereich 19 einer Größe korrespondieren.

Gemäß einigen Ausführungsbeispielen ist der Controller 6 ausgebildet, um das Anzeigesignal so zu erzeugen, dass der Bogenabschnitt 20 auf einem Hintergrund angezeigt wird, von dem sich der Bogenabschnitt 20 abhebt.

Gemäß einigen Ausführungsbeispielen ist der Controller 6 ausgebildet, um das Anzeigesignal so zu erzeugen, dass der Hintergrund in dem Winkelbereich 19 zumindest teilweise anders dargestellt ist, als außerhalb des Winkelbereichs 19.

Gemäß einigen Ausführungsbeispielen ist der Controller 6 ausgebildet, um das Anzeigesignal so zu erzeugen, dass der Bogenabschnitt 20 konzentrisch zu einem äußeren Rand des Hintergrunds angeordnet ist.

Gemäß einigen Ausführungsbeispielen ist der Controller 6 ausgebildet, um das Anzeigesignal so zu erzeugen, dass die Richtungs- und Entfernungsanzeige vor dem Hintergrund eines Kartenausschnitts 31 angezeigt wird.

Einige Ausführungsbeispiele betreffen eine Vorrichtung mit einer Ansteuereinrichtung 1 nach einem der vorhergehenden Ausführungsbeispiele und einer Anzeigefläche 3, die eine Anzeige gemäß dem Anzeigesignal anzeigt.

Gemäß einigen weiteren Ausführungsbeispielen der Vorrichtung ist die Ansteuereinrichtung 1 ausgebildet ist, um bei Herstellung einer Verbindung mit einem fahrzeuginternen Navigationsgerät ein Navigationssignal auszugeben, das eine Ausgabe einer Navigation mittels des fahrzeuginternen Navigationsgeräts zu dem ausgewählten Ziel 32, 72 bewirkt.

Ergänzend oder alternativ kann bei dem Verfahren ein Richtungs- und Entfernungsanzeige 64 auf der Anzeigefläche 3 angezeigt werden. Dazu kann bei dem Verfahren das Eingangssignal empfangen werden. Das Eingangssignal kann eine Information zu einer Entfernung und einer Richtung zu einem Ziel 30, 23, 33 72 aufweisen. Ferner kann bei dem Verfahren das Anzeigesignal so erzeugt werden, dass das Anzeigesignal eine Darstellung eines einen Winkelbereich 19 überdeckenden Bogenabschnitts 20 auf der Anzeigefläche 3 bewirkt, wobei eine Größe des Winkelbereichs 19 zu der Information über die Entfernung und eine Position einer Mittelachse 21 des Winkelbereichs 19 zu der Information über der Richtung des Ziels 30, 23, 33 72 korrespondiert.

Einige Ausführungsbeispiele betreffen ein Computerprogramm zur Durchführung des Verfahrens nach zumindest einem der Ausführungsbeispiele, wenn das Computerprogramm auf einer programmierbaren Hardwarekomponente abläuft.

Ergänzend oder alternativ kann die Ansteuereinrichtung 1 dazu dienen, eine Wiedergabe einer Mehrzahl von Anzeigebereichen 2 auf der Anzeigefläche 3 zu verändern; wobei ein erster Anzeigebereich 2a in einem Vordergrund einen zweiten Anzeigebereich 2b in einem Hintergrund teilweise überlappt. Dabei kann jedem der Anzeigebereiche 2 jeweils eine Information zu einem möglichen Ziel 30, 32, 33, 72 zugeordnet sein. Dazu kann die Eingangseinrichtung 4 ausgebildet sein, um ein Speichersignal zu empfangen, das zu einer vorbestimmten Auswahlgeste eines Benutzers korrespondiert. Ferner kann der Controller 6 ausgebildet sein, um ansprechend auf das Speichersignal ein Anzeigesignal zu erzeugen, das eine Anzeige des zweiten Anzeigebereichs 2b in dem Vordergrund und eine Anzeige eines zu der Information des ersten Anzeigebereichs korrespondierenden Hinweisfeldes 8 außerhalb der Mehrzahl der Anzeigebereiche 2 bewirkt.

Gemäß einigen Ausführungsbeispielen ist der Controller 6 ausgebildet, um ansprechend auf ein Aufrufsignal, das zu einer weiteren Auswahlgeste des Benutzers korrespondiert, das Anzeigesignal so zu verändern, dass eine Wiedergabe des ersten Anzeigebereichs 2a zu dem das Hinweisfeld 8 korrespondiert, bewirkt.

Gemäß einigen Ausführungsbeispielen ist die Eingangseinrichtung 4 ausgebildet, um das Aufrufsignal zu empfangen, wenn die Auswahlgeste zu der das Aufrufsignal korrespondiert, an dem Hinweisfeld 8 beginnt.

Gemäß einigen Ausführungsbeispielen ist die Eingangseinrichtung 4 ausgebildet, um das Speichersignal zu empfangen, wenn die Auswahlgeste, zu der das Speichersignal 5 korrespondiert, an dem Anzeigebereich 2a beginnt.

Gemäß einigen Ausführungsbeispielen ist der Controller 6 ausgebildet, um ansprechend auf ein Löschsignal, das zu einer weiteren Auswahlgeste eines Benutzers korrespondiert, und das von der Eingangseinrichtung 4 empfangen wird, das Anzeigesignal so zu erzeugen, dass eine Anzeige des zweiten Anzeigebereichs 2b in dem Vordergrund bewirkt und der erste Anzeigebereich 2a gelöscht wird.

Gemäß einigen Ausführungsbeispielen ist die Eingangseinrichtung 4 ausgebildet, um das Löschsignal zu empfangen, wenn die Auswahlgeste, zu der das Löschsignal korrespondiert, an dem Anzeigebereich 2a beginnt und wobei sich die Auswahlgeste in eine andere Richtung erstreckt, als die Auswahlgeste, zu der das Speichersignal korrespondiert.

Gemäß einigen Ausführungsbeispielen ist der Controller 6 ausgebildet, um das Anzeigesignal so zu erzeugen, dass das Hinweisfeld 8 zu der Information einer Mehrzahl von Anzeigebereichen 2 korrespondiert.

Gemäß einigen Ausführungsbeispielen ist der Controller 6 ausgebildet, um ansprechend auf das Aufrufsignal das Anzeigesignal so zu verändern, dass eine Wiedergabe der Anzeigebereiche 2 bewirkt wird, zu denen das Hinweisfeld 8 korrespondiert, so dass diese nebeneinander angeordnet sind.

Gemäß einigen Ausführungsbeispielen ist der Controller 6 ausgebildet, um das Anzeigesignal so zu erzeugen, es eine Wiedergabe eines Kartenausschnitts 31 als Hintergrund bewirkt, wobei die Ziele 30, 32, 33, 72 zumindest teilweise in einem Bereich des wiedergegebenen Kartenausschnitts 31 liegen.

Gemäß einigen Ausführungsbeispielen ist die Eingangseinrichtung 4 ausgebildet, um ein Zielsignal zu empfangen, das eine Information umfasst, zu einer Mehrzahl von möglichen Zielen 30, 32, 33, 72 ,wobei die Anzeigebereiche 2basierend auf dem Zielsignal angezeigt werden.

Gemäß einigen Ausführungsbeispielen ist die Eingangseinrichtung 4 ausgebildet, um ein Temperatursignal zu empfangen, das eine Information über eine Temperatur umfasst und die Anzeigebereiche 2 basierend auf der Information des Temperatursignals angezeigt werden.

Gemäß einigen Ausführungsbeispielen ist die Eingangseinrichtung 4 ausgebildet, um ein Umgebungssignal zu empfangen, das eine Information über eine Umgebung umfasst und die Anzeigebereiche 2 basierend auf der Information des Umgebungssignals angezeigt werden.

Einige Ausführungsbeispiele betreffen eine Vorrichtung mit einer Ansteuereinrichtung 1 nach einem der vorhergehenden Ausführungsbeispiele und einer Anzeigefläche 3, die eine Anzeige gemäß dem Anzeigesignal anzeigt.

Gemäß einigen weiteren Ausführungsbeispielen der Vorrichtung ist die Ansteuereinrichtung 1 ausgebildet, um bei Herstellung einer Verbindung mit einem fahrzeuginternen Navigationsgerät ein Navigationssignal auszugeben, das eine Ausgabe einer Navigation mittels des fahrzeuginternen Navigationsgeräts zu einem ausgewählten Ziel 32, 72 bewirkt. Ergänzen oder alternativ kann bei dem Verfahren eine Wiedergabe einer Mehrzahl von Anzeigebereichen 2 auf der Anzeigefläche 3 verändert werden. Dazu können eine Mehrzahl von Anzeigebereichen 2 angezeigt werden, wobei ein erster Anzeigebereich 2a in einem Vordergrund einen zweiten Anzeigebereich 2b in einem Hintergrund teilweise überlappt, wobei jedem der Anzeigebereich 2 jeweils eine Information zu einem möglichen Ziel 30, 32, 33, 72 zugeordnet ist. Ferner kann ein Speichersignal 5 empfangen werden, das zu einer vorbestimmten Auswahlgeste eines Benutzers korrespondiert. Des Weiteren kann das Anzeigesignal erzeugt werden, ansprechend auf das Speichersignal, wobei das Anzeigesignal eine Anzeige des zweiten Anzeigebereichs 2b in dem Vordergrund und eine Anzeige eines zu der Information des ersten Anzeigebereichs 2a korrespondierenden Hinweisfeldes 8 in einem Bereich außerhalb der Mehrzahl der Anzeigebereiche 2 auf der Anzeigefläche 3 bewirkt.

Einige Ausführungsbeispiele betreffen ein Computerprogramm zur Durchführung des Verfahrens nach zumindest einem der Ausführungsbeispiele, wenn das Computerprogramm auf einer programmierbaren Hardwarekomponente abläuft.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Ansteuereinrichtung (1) zum Markieren einer Mehrzahl möglicher Ziele (30, 23, 33, 72) in einem Kartenausschnitt (31) auf einer Anzeigefläche (3) mit:
einer Eingangseinrichtung (4), die ausgebildet ist, um ein Kategorieauswahlsignal (35) zu empfangen, das zu einer Auswahl eines Benutzers korrespondiert, wobei das Kategorieauswahlsignal (35) eine Information über eine gewählte Kategorie möglicher Primärziele (32) umfasst; und
einem Controller (6), der ausgebildet ist, um ansprechend auf das Kategorieauswahlsignal ein Anzeigesignal (37) zu erzeugen, welches eine Wiedergabe möglicher Primärziele (32) korrespondierend zu der Information der gewählten Kategorie und eine Wiedergabe von Sekundärzielen (33) zumindest einer anderen Kategorie in dem Kartenausschnitt (31) bewirkt, wobei sich die Darstellung der Primärziele (32) der gewählten Kategorie von der Darstellung der Sekundärziele (33) der anderen Kategorie unterscheidet ., wobei der Controller (6) ausgebildet ist, um das Anzeigesignal (37) so zu erzeugen, dass ferner eine Wiedergabe eines Anzeigebereichs (2) bewirkt wird, wobei dem Anzeigebereich (2) eine Information zu einem ausgewählten Primärziel (32, 72) zugeordnet ist, **dadurch gekennzeichnet, dass** der Controller (6) ausgebildet ist, um das Anzeigesignal (37) so zu erzeugen, dass der Anzeigebereich (2) die Primärziele (32) nicht überlappt und Sekundärziele überlappt.

2. Ansteuereinrichtung (1) nach Anspruch 1, wobei der Controller (6) ausgebildet ist, um das Anzeigesignal (37) so zu erzeugen, dass sich eine Darstellung des Primärziels (72), dessen Information dem wiedergegebenen Anzeigebereich (2) zugeordnet ist, von der Darstellung der anderen Primärziele (32) und der Sekundärziele (33) unterscheidet.

3. Ansteuereinrichtung (1) nach Anspruch 2, wobei der Controller (6) ausgebildet ist, um ansprechend auf ein von der Eingangseinrichtung (4) empfangenes Kartenanzeigesignal (38), das zu einer Bedienbewegung eines Benutzers korrespondiert, das Anzeigesignal (37) so zu verändern, dass eine verkleinerte Wiedergabe des Anzeigebereichs (2) bewirkt wird.

4. Ansteuereinrichtung (1) nach einem der Ansprüche 1 bis 3, wobei der Controller (6) ausgebildet ist, um ansprechend auf ein von der Eingangseinrichtung (4) empfangenes Kartenanzeigesignal (38), das zu einer Bedienbewegung eines Benutzers korrespondiert, das Anzeigesignal (37) so zu verändern, dass eine Wiedergabe des Anzeigebereichs (2) in einem Randbereich der Anzeigefläche (3) bewirkt wird.

5. Ansteuereinrichtung (1) nach einem der vorhergehenden Ansprüche, wobei der Controller (6) ausgebildet ist, um ansprechend auf ein Menüauswahlsignal (39), das von der Eingangseinrichtung (4) empfangen wird und zu einer Auswahlgeste des Benutzers korrespondiert, ein Kategorieauswahlanzeigesignal (36) zu erzeugen, das die Wiedergabe einer Mehrzahl von Kategorieauswahlbereichen (34) bewirkt, wobei jedem der Kategorieauswahlbereiche (34) jeweils zumindest ein Ziel (30, 23, 33, 72) zugeordnet ist.

6. Ansteuereinrichtung (1) nach Anspruch 5, wobei die Eingangseinrichtung (4) ausgebildet ist, um das Kategorieauswahlsignal (35) zu empfangen, wenn eine Auswahlgeste eines Benutzers an einem Kategorieauswahlbereich (34) beginnt.

7. Ansteuereinrichtung (1) nach einem der Ansprüche 5 bis 6, wobei der Controller (6) ausgebildet ist, um ansprechend auf das Kategorieauswahlsignal (35), wenn dem Kategorieauswahlbereich (34) eine Information zu einer Mehrzahl von Subkategorien zugeordnet ist, das Anzeigesignal (37) so zu verändern, dass die Wiedergabe einer Mehrzahl von Subkategorieauswahlbereichen (77) bewirkt wird, wobei jedem der Subkategorieauswahlbereiche (77) zumindest ein Ziel (30, 23, 33, 72) zugeordnet ist.

8. Ansteuereinrichtung (1) nach Anspruch 7, wobei die Eingangseinrichtung (4) ausgebildet ist, um das Kategorieauswahlsignal (35) zu empfangen, wenn eine Auswahlgeste eines Benutzers an einem Subkategorieauswahlbereich (77) beginnt.

9. Vorrichtung mit einer Ansteuereinrichtung (1) nach einem der vorhergehenden Ansprüche und ferner umfassend: eine Anzeigefläche (3), die eine Anzeige gemäß dem Anzeigesignal (37) anzeigt.

10. Vorrichtung nach Anspruch 9, wobei die Ansteuereinrichtung (1) ausgebildet ist, um bei Herstellung einer Verbindung mit einem fahrzeuginternen Navigationsgerät ein Navigationssignal auszugeben, das eine Ausgabe einer Navigation mittels des fahrzeuginternen Navigationsgeräts zu dem ausgewählten Primärziel (32, 72) bewirkt.

11. Verfahren (40) zum Markieren einer Mehrzahl möglicher Ziele (30, 23, 33, 72) in einem Kartenausschnitt (31) auf einer Anzeigefläche (3), wobei das Verfahren (40) umfasst:
Empfangen (41) eines Kategorieauswahlsignals (35), das zu einer Auswahl eines Benutzers korrespondiert, wobei das Kategorieauswahlsignals (35) eine Information über eine gewählte Kategorie möglicher Ziele (30, 23, 33, 72) umfasst;
Erzeugen (42) eines Anzeigesignals (37), ansprechend auf das Kategorieauswahlsignal (35), welches eine Wiedergabe möglicher Primärziele (32) korrespondierend zu der Information der gewählten Kategorie und eine Wiedergabe von Sekundärzielen (32) zumindest einer anderen Kategorie in dem Kartenausschnitt (31) bewirkt, wobei sich die Darstellung der Primärziele (32) der gewählten Kategorie von der Darstellung der Sekundärziele (33) der anderen Kategorie unterscheidet;
Erzeugen des Anzeigesignals (37), sodass ferner eine Wiedergabe eines Anzeigebereichs (2) bewirkt wird, wobei dem Anzeigebereich (2) eine Information zu einem ausgewählten Primärziel (32, 72) zugeordnet ist; **dadurch gekennzeichnet, dass** das Anzeigesignal (37) so erzeugt wird, dass der Anzeigebereich (2) die Primärziele (32) nicht überlappt und Sekundärziele überlappt.

12. Computerprogramm zur Durchführung des Verfahrens (41) nach Anspruch 11, wenn das Computerprogramm auf einer programmierbaren Hardwarekomponente abläuft.

## Claims

1. Actuation device (1) for marking a plurality of possible destinations (30, 23, 33, 72) in a map detail (31) on a display panel (3), having:
an input device (4) that is configured to receive a category selection signal (35) that corresponds to a selection by a user, the category selection signal (35) comprising a piece of information about a chosen category of possible primary destinations (32); and
a controller (6) that is configured to respond to the category selection signal by producing a display signal (37) that causes a reproduction of possible primary destinations (32) corresponding to the information in the chosen category and a reproduction of secondary destinations (33) in at least one other category in the map detail (31), the depiction of the primary destinations (32) in the chosen category differing from the depiction of the secondary destinations (33) in the other category,
wherein the controller (6) is configured to produce the display signal (37) such that, further, a reproduction of a display area (2) is caused, the display area (2) having an associated piece of information pertaining to a selected primary destination (32, 72),
**characterized in that**
the controller (6) is configured to produce the display signal (37) such that the display area (2) does not overlap the primary destinations (32) and overlaps secondary destinations.

2. Actuation device (1) according to Claim 1, wherein the controller (6) is configured to produce the display signal (37) such that a depiction of the primary destination (72) whose information is associated with the reproduced display area (2) differs from the depiction of the other primary destinations (32) and of the secondary destinations (33).

3. Actuation device (1) according to Claim 2, wherein the controller (6) is configured to respond to a map display signal (38), which is received by the input device (4) and corresponds to an operator control movement by a user, by altering the display signal (37) such that a reduced reproduction of the display area (2) is caused.

4. Actuation device (1) according to one of Claims 1 to 3, wherein the controller (6) is configured to respond to a map display signal (38), which is received by the input device (4) and corresponds to an operator control movement by a user, by altering the display signal (37) such that a reproduction of the display area (2) in a marginal area of the display panel (3) is caused.

5. Actuation device (1) according to one of the preceding claims, wherein the controller (6) is configured to respond to a menu selection signal (39), which is received by the input device (4) and corresponds to a selection gesture by the user, by producing a category selection display signal (36) that causes the reproduction of a plurality of category selection areas (34), each of the category selection areas (34) respectively having at least one associated destination (30, 23, 33, 72).

6. Actuation device (1) according to Claim 5,
wherein the input device (4) is configured to receive the category selection signal (35) when a selection gesture by a user begins at a category selection area (34).

7. Actuation device (1) according to either of Claims 5 and 6,
wherein the controller (6) is configured to respond to the category selection signal (35), when the category selection area (34) has an associated piece of information pertaining to a plurality of subcategories, by altering the display signal (37) such that the reproduction of a plurality of sub-category selection areas (37) is caused, each of the sub-category selection areas (77) having at least one associated destination (30, 23, 33, 72).

8. Actuation device (1) according to Claim 7,
wherein the input device (4) is configured to receive the category selection signal (35) when a selection gesture by a user begins at a sub-category selection area (77).

9. Apparatus having an actuation device (1) according to one of the preceding claims and further comprising: a display panel (3) that displays a display in accordance with the display signal (37).

10. Apparatus according to Claim 9,
wherein the actuation device (1) is configured to output, on set-up of a connection to a vehicle-internal navigation device, a navigation signal that causes an output of a navigation by means of the vehicle-internal navigation device for the selected primary destination (32, 72).

11. Method (40) for marking a plurality of possible destinations (30, 23, 33, 72) in a map detail (31) on a display panel (3), wherein the method (40) comprises:
receiving (41) a category selection signal (35) that corresponds to a selection by a user, the category selection signal (35) comprising a piece of information about a chosen category of possible destinations (30, 23, 33, 72);
producing (42) a display signal (37), in response to the category selection signal (35), that causes a reproduction of possible primary destinations (32) corresponding to the information in the chosen category and a reproduction of secondary destinations (32) in at least one other category in the map detail (31), the depiction of the primary destinations (32) in the chosen category differing from the depiction of the secondary destinations (33) in the other category;
producing the display signal (37), so that, further, a reproduction of a display area (2) is caused, the display area (2) having an associated piece of information pertaining to a selected primary destination (32, 72); **characterized in that** the display signal (37) is produced such that the display area (2) does not overlap the primary destinations (32) and overlaps secondary destinations.

12. Computer program for performing the method (41) according to Claim 11 when the computer program runs on a programmable hardware component.

## Revendications

1. Dispositif de commande (1) destiné à marquer une pluralité de cibles (30, 23, 33, 72) possibles dans une portion de carte (31) sur une surface d'affichage (3), comprenant :
un dispositif d'entrée (4) qui est configuré pour recevoir un signal de sélection de catégorie (35) qui correspond à une sélection d'un utilisateur, le signal de sélection de catégorie (35) comprenant une information à propos d'une catégorie sélectionnée de cibles primaires (32) possibles ; et
un contrôleur (6) qui est configuré pour, en réaction au signal de sélection de catégorie, générer un signal d'affichage (37) qui produit une reproduction des cibles primaires (32) possibles correspondant à l'information de la catégorie sélectionnée et une reproduction de cibles secondaires (33) d'au moins une autre catégorie dans la portion de carte (31), la représentation des cibles primaires (32) de la catégorie sélectionnée étant différente de la représentation des cibles secondaires (33) de l'autre catégorie
le contrôleur (6) étant configuré pour générer le signal d'affichage (37) de telle sorte qu'une reproduction d'une zone d'affichage (2) est en outre produite, une information à propos d'une cible primaire (32, 72) sélectionnée étant associée à la zone d'affichage (2),
**caractérisé en ce que** le contrôleur (6) est configuré pour générer le signal d'affichage (37) de telle sorte que la zone d'affichage (2) ne chevauche par les cibles primaires (32) et chevauche les cibles secondaires.

2. Dispositif de commande (1) selon la revendication 1, le contrôleur (6) étant configuré pour générer le signal d'affichage (37) de telle sorte qu'une représentation de la cible primaire (72) dont l'information est associée à la zone d'affichage (2) de reproduction soit différente de la représentation des autres cibles primaires (32) et des cibles secondaires (33).

3. Dispositif de commande (1) selon la revendication 2, le contrôleur (6) étant configuré pour, en réaction à un signal d'affichage de carte (38) reçu par le dispositif d'entrée (4) et qui correspond à un mouvement de commande d'un utilisateur, modifier le signal d'affichage (37) de telle sorte qu'il se produit une reproduction à taille réduite de la zone d'affichage (2).

4. Dispositif de commande (1) selon l'une des revendications 1 à 3, le contrôleur (6) étant configuré pour, en réaction à un signal d'affichage de carte (38) reçu par le dispositif d'entrée (4) et qui correspond à un mouvement de commande d'un utilisateur, modifier le signal d'affichage (37) de telle sorte qu'il se produit une reproduction de la zone d'affichage (2) dans une zone de bordure de la surface d'affichage (3).

5. Dispositif de commande (1) selon l'une des revendications précédentes, le contrôleur (6) étant configuré pour, en réaction à un signal de sélection de menu (39) qui est reçu par le dispositif d'entrée (4) et qui correspond à un geste de sélection de l'utilisateur, générer un signal d'affichage de sélection de catégorie (36) qui produit la reproduction d'une pluralité de zones de sélection de catégorie (34), au moins une cible (30, 23, 33, 72) étant respectivement associée à chacune des zones de sélection de catégorie (34).

6. Dispositif de commande (1) selon la revendication 5, le dispositif d'entrée (4) étant configuré pour recevoir le signal de sélection de catégorie (35) lorsqu'un geste de sélection d'un utilisateur commande au niveau d'une zone de sélection de catégorie (34).

7. Dispositif de commande (1) selon l'une des revendications 5 à 6, le contrôleur (6) étant configuré pour, en réaction au signal de sélection de catégorie (35), lorsqu'une information à propos d'une pluralité de sous-catégories est associée à la zone de sélection de catégorie (34), modifier le signal d'affichage (37) de telle sorte que la reproduction d'une pluralité de zones de sélection de sous-catégorie (77) est produite, au moins une cible (30, 23, 33, 72) étant respectivement associée à chacune des zones de sélection de sous-catégorie (77).

8. Dispositif de commande (1) selon la revendication 7, le dispositif d'entrée (4) étant configuré pour recevoir le signal de sélection de catégorie (35) lorsqu'un geste de sélection d'un utilisateur commande au niveau d'une zone de sélection de sous-catégorie (77).

9. Système comprenant un dispositif de commande (1) selon l'une des revendications précédentes et comprenant en outre : une surface d'affichage (3) qui affiche un affichage conformément au signal d'affichage (37).

10. Système selon la revendication 9, le dispositif de commande (1) étant configuré pour, lors de l'établissement d'une liaison avec un appareil de navigation interne au véhicule, délivrer un signal de navigation qui produit une émission d'une navigation au moyen de l'appareil de navigation interne au véhicule en direction de la cible primaire (32, 72) sélectionnée.

11. Procédé (40) pour marquer une pluralité de cibles (30, 23, 33, 72) possibles dans une portion de carte (31) sur une surface d'affichage (3), le procédé (40) comprenant les étapes suivantes :
réception (41) d'un signal de sélection de catégorie (35) qui correspond à une sélection d'un utilisateur, le signal de sélection de catégorie (35) comprenant une information à propos d'une catégorie sélectionnée de cibles (30, 23, 33, 72) possibles ;
en réaction au signal de sélection de catégorie (35), génération (42) d'un signal d'affichage (37) qui produit une reproduction des cibles primaires (32) possibles correspondant à l'information de la catégorie sélectionnée et une reproduction de cibles secondaires (32) d'au moins une autre catégorie dans la portion de carte (31), la représentation des cibles primaires (32) de la catégorie sélectionnée étant différente de la représentation des cibles secondaires (33) de l'autre catégorie ;
génération du signal d'affichage (37) de telle sorte qu'une reproduction d'une zone d'affichage (2) est en outre produite, une information à propos d'une cible primaire (32, 72) sélectionnée étant associée à la zone d'affichage (2) ;
**caractérisé en ce que** le signal d'affichage (37) est généré de telle sorte que la zone d'affichage (2) ne chevauche par les cibles primaires (32) et chevauche les cibles secondaires.

12. Programme informatique destiné à mettre en oeuvre le procédé (41) selon la revendication 11 lorsque le programme informatique est exécuté sur un composant matériel programmable.
